(19) **Europäisches Patentamt / European Patent Office / Office européen des brevets**

(11) **EP 2 327 067 B1**

(12) **FASCICULE DE BREVET EUROPEEN**

(45) Date de publication et mention
de la délivrance du brevet:
**04.11.2015 Bulletin 2015/45**

(21) Numéro de dépôt: **09741322.3**

(22) Date de dépôt: **14.09.2009**

(51) Int Cl.:
**G08G 5/02** (2006.01)

(86) Numéro de dépôt international:
**PCT/FR2009/001088**

(87) Numéro de publication internationale:
**WO 2010/055218 (20.05.2010 Gazette 2010/20)**

(54) **PROCEDE ET DISPOSITIF D'AIDE AU PILOTAGE D'UN AERONEF LORS D'UNE PHASE D'ATTERRISSAGE**

VERFAHREN UND EINRICHTUNG ZUM HELFEN BEIM FLIEGEN EINES FLUGZEUGS WÄHREND EINER LANDEPHASE

METHOD AND DEVICE FOR AIDING THE PILOTING OF AN AIRCRAFT DURING A LANDING PHASE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **16.09.2008 FR 0805067**

(43) Date de publication de la demande:
**01.06.2011 Bulletin 2011/22**

(73) Titulaire: **AIRBUS OPERATIONS (SAS)**
**31060 Toulouse (FR)**

(72) Inventeurs:
- **VILLAUME, Fabrice**
  **F-31600 Seysses (FR)**
- **JOURNADE, Jérôme**
  **F-31170 Tournefeuille (FR)**

(74) Mandataire: **Gevers France**
**41, avenue de Friedland**
**75008 Paris (FR)**

(56) Documents cités:
**FR-A- 2 817 979      FR-A- 2 897 593**
**US-B1- 6 304 800**

EP 2 327 067 B1

**Description**

La présente invention concerne un procédé et un dispositif d'aide au pilotage d'un aéronef, en particulier d'un avion de transport civil, lors d'une phase d'atterrissage, ledit aéronef étant pourvu d'un système de freinage automatique qui est susceptible de freiner automatiquement l'aéronef au sol en fonction d'un mode de freinage sélectionné.

On sait que, lors du roulage sur une piste d'atterrissage suite à un atterrissage (ou à une décision d'interruption d'un décollage), la décélération (ou le freinage) d'un aéronef est réalisée, soit manuellement et directement par le pilote en utilisant les pédales de frein, soit par l'intermédiaire d'un système de freinage automatique qui asservit une décélération fixe et présélectionnée par le pilote avant d'atterrir, via un bouton-poussoir ou un bouton rotatif électro-aimanté, conformément à l'un d'une pluralité de modes de freinage différents.

Or, ces systèmes de freinage, qu'ils soient manuels ou automatiques, ne disposent d'aucune conscience de la réalité topographique de la piste d'atterrissage (longueur, largeur, ...) sur laquelle est réalisé l'atterrissage.

Par les documents FR-2 817 979 et FR-2 857 468, on connaît des dispositifs de commande automatique de la décélération d'un aéronef en phase de roulage, qui permettent de remédier en partie à cet inconvénient. Ces dispositifs connus permettent, en effet, à l'équipage de l'aéronef, de sélectionner une bretelle de sortie sur la piste d'atterrissage et de gérer automatiquement et optimalement (aide à la sélection d'une bretelle de sortie réaliste et compatible avec les performances connues d'atterrissage, minimisation du temps d'occupation de la piste, minimisation de l'énergie de freinage nécessaire, amélioration du confort) la décélération de l'aéronef lors du roulage à l'atterrissage jusqu'à l'atteinte de la bretelle de sortie sélectionnée. Par conséquent, dans des conditions opérationnelles normales, l'atteinte optimale de cette bretelle de sortie est garantie grâce à ces dispositifs usuels.

Par ailleurs, par le document FR-2 897 593, on connaît un procédé et un système pour fournir, lors d'un atterrissage, dès avant le contact de l'aéronef avec la piste d'atterrissage, une information sur le fait que l'atterrissage sera long ou non, ce qui laisse du temps (le cas échéant) pour prendre des mesures permettant de remédier aux inconvénients d'un atterrissage long. Pour ce faire, on mesure l'altitude de l'aéronef, on calcule la distance horizontale séparant ledit aéronef du seuil d'extrémité proximal de la piste d'atterrissage, et on détermine, à partir de cette altitude et de cette distance horizontale, ainsi qu'à partir d'un angle d'approche, une position d'aboutissement estimée dudit aéronef sur ladite piste d'atterrissage.

En outre, le document US-2004/0167685 prévoit de calculer un point critique sur la piste d'atterrissage, au-delà duquel l'atterrissage peut conduire à un dépassement de la piste, et d'émettre une alarme si l'axe de descente courant de l'aéronef atteint la piste au-delà de ce point critique.

La présente invention a, plus particulièrement, pour objet de prévenir l'équipage de l'aéronef (qui est muni d'un système de freinage automatique) contre un risque de sortie longitudinale de la piste d'atterrissage, lors du roulage sur cette piste pendant l'atterrissage.

On sait que, lors d'un atterrissage, il peut apparaître un problème au niveau de la normalité des conditions d'atterrissage et de leur gestion par l'équipage de l'aéronef. En effet, avant d'entreprendre un vol, l'équipage doit s'assurer que l'atterrissage de l'aéronef sur l'aéroport de destination est possible, c'est-à-dire que les performances prévues d'atterrissage, conjuguées à des conditions exogènes attendues (météorologie, connaissance de l'aéroport de destination, expérience de l'équipage, ...) sont compatibles avec la longueur de la piste d'atterrissage disponible au niveau dudit aéroport de destination.

Toutefois, il est possible que les conditions météorologiques se détériorent au moment de l'exécution de l'atterrissage (apparition de fortes précipitations, de forts gradients de vent, ...) rendant alors difficile la réalisation par l'équipage de l'atterrissage jusqu'à l'arrêt de l'aéronef sur la longueur disponible de la piste d'atterrissage utilisée (ou encore l'obtention d'une vitesse qui est compatible avec la prise d'une bretelle de sortie que l'aéronef compte emprunter). Dans de telles conditions, un risque de sortie de piste longitudinale peut devenir important.

Or, ce risque de sortie de piste est actuellement intégralement géré par l'équipage, sans assistance, ni automatisme, grâce à son expérience, son entraînement et une bonne préparation préliminaire du vol, ce qui n'est pas satisfaisant.

De plus, lorsque l'aéronef est muni d'un système de freinage automatique, il est possible, en particulier au regard des conditions précédentes, que l'équipage sélectionne sur ledit système de freinage automatique un mode de freinage inapproprié. Le cas le plus problématique est la sélection d'un mode de freinage insuffisant (c'est-à-dire qui engendre une décélération trop faible), ce qui peut notamment augmenter le risque de sortie de piste si le pilote ne réagit pas à temps pendant le roulage.

La présente invention a pour objet de remédier à ces inconvénients. Elle concerne un procédé d'aide au pilotage d'un aéronef lors d'une phase d'atterrissage, qui permet notamment d'alerter l'équipage de l'aéronef contre un risque de sortie longitudinale d'une piste d'atterrissage lors du roulage sur cette piste, ledit aéronef étant pourvu d'un système de freinage automatique qui est susceptible de freiner automatiquement l'aéronef au sol en fonction d'un mode de freinage sélectionné, ledit système de freinage automatique comprenant une pluralité de modes de freinage différents réalisant respectivement des freinages d'intensités différentes.

A cet effet, selon l'invention, ledit procédé est conforme à la revendication 1.

Ainsi, grâce à l'invention, en cas de risque de sortie longitudinale de la piste d'atterrissage (déterminée et effectivement utilisée) lors de l'emploi d'un système de freinage automatique sur l'aéronef, c'est-à-dire lorsque la distance minimale de freinage de l'aéronef (qui dépend des capacités de freinage du mode de freinage actuellement sélectionné sur le système de freinage automatique) est supérieure à la longueur de cette piste, on prévient l'équipage de l'aéronef, et ceci par une alerte visuelle et/ou par une alerte sonore. De plus, cette ou ces alertes sont émises tant que le risque de sortie de piste subsiste.

Dans un mode de réalisation particulier, on compare le mode de freinage actuellement sélectionné au mode de freinage maximal du système de freinage automatique, et à l'étape d3), on émet ladite alerte uniquement si ledit mode de freinage actuellement sélectionné ne correspond pas audit mode de freinage maximal, c'est-à-dire que l'on n'émet pas d'alerte si le mode de freinage maximal est actuellement sélectionné sur le système de freinage automatique.

En outre, dans un mode de réalisation préféré, si, à la fin d'une durée prédéterminée après l'émission d'une alerte à l'étape d3), l'équipage n'a pas sélectionné un autre mode de freinage, on sélectionne automatiquement, à une étape d4), sur ledit système de freinage automatique, un mode de freinage présentant une intensité de freinage plus importante que celle dudit mode de freinage actuellement sélectionné. Avantageusement, une telle sélection automatique à l'étape d4) est réalisée de proche en proche :

a) en choisissant automatiquement le mode de freinage d'intensité de freinage immédiatement supérieure à celle du mode de freinage actuel ; et

b) en vérifiant automatiquement si ce mode de freinage choisi est suffisant pour arrêter de manière sûre l'aéronef sur la piste d'atterrissage,

les étapes a) et b) étant répétées automatiquement jusqu'à l'obtention d'un mode de freinage suffisant à l'étape b), ce mode de freinage suffisant étant alors sélectionné automatiquement sur ledit système de freinage automatique de l'aéronef.

Par ailleurs, de façon avantageuse, on inhibe automatiquement au moins l'étape d3) (relative à l'émission d'une alerte), à partir d'une hauteur de vol donnée (de l'aéronef) au-dessus de la piste d'atterrissage, et ceci jusqu'à une activation dudit système de freinage automatique. Ainsi, on ne perturbe pas l'équipage dans cette phase critique de l'atterrissage.

Par ailleurs, de façon avantageuse, ledit modèle de performance dépend d'un état prévisionnel (sec, mouillé, contaminé) de la piste d'atterrissage, tel que sélectionné par exemple par le pilote de l'aéronef.

En outre, avantageusement, à l'étape d1), pour estimer la distance minimale de freinage, on réalise les opérations suivantes :

- on calcule, à l'aide de la position courante de l'aéronef par rapport au plan de descente standard, une distance APD qui est relative à une phase aérienne au-dessus de la piste d'atterrissage ;
- on calcule, à l'aide dudit modèle de performance, une distance GPD de roulage au sol entre le toucher du sol par l'aéronef et l'arrêt définitif dudit aéronef ; et
- on fait la somme desdites distances APD et GPD pour en déduire ladite distance minimale de freinage.

De préférence, on calcule ladite distance GPD à l'aide d'un réseau de neurones.

En outre, pour affiner les calculs, de façon avantageuse, à l'étape d1), on augmente ladite distance minimale de freinage si l'aéronef est situé au-dessus du plan de descente standard et va rejoindre ce dernier au-delà du seuil de la piste d'atterrissage.

Par ailleurs, avantageusement, on présente sur une carte d'aéroport visualisée sur un écran de visualisation du poste de pilotage, une symbologie (de forme et/ou de couleur variables) illustrant ladite distance minimale de freinage. De plus, cette symbologie varie en fonction de la différence entre ladite distance minimale de freinage et ladite longueur de la piste d'atterrissage déterminée, c'est-à-dire en fonction du risque de sortie longitudinale de la piste d'atterrissage.

Par ailleurs, dans un mode de réalisation particulier, entre les étapes c) et d) précitées, on réalise une étape intermédiaire consistant à vérifier que l'aéronef est bien en train d'atterrir sur la piste d'atterrissage déterminée à l'étape a). Cette étape intermédiaire est mise en oeuvre lorsque l'aéronef se trouve à une hauteur radio-altimétrique prédéterminée, par exemple 500 pieds (environ 150 mètres). Cette étape intermédiaire peut, notamment, consister à vérifier :

- que l'écart angulaire entre l'orientation magnétique de la piste d'atterrissage déterminée et la route magnétique courante de l'aéronef est bien inférieur à une valeur de seuil prédéterminée, par exemple 5° ; ou
- que l'écart métrique entre la position latérale de l'aéronef et l'axe de la piste d'atterrissage déterminée est bien inférieur à une valeur de seuil prédéterminée, par exemple 300 mètres.

Dans le cadre de la présente invention, à l'étape a), la piste d'atterrissage destinée à l'atterrissage de l'aéronef sur l'aéroport (qui est muni d'une pluralité de pistes d'atterrissage) peut être sélectionnée manuellement par un membre d'équipage, notamment à l'aide d'un moyen d'interface interactif. Toutefois, dans un mode de réalisation préféré, on détermine automatiquement ladite piste d'atterrissage. Pour ce faire, avantageusement, on réalise, de façon automatique, la suite d'opérations suivante :

> a1) on détermine, pour chacune desdites pistes d'atterrissage de l'aéroport, les coordonnées du seuil de la piste d'atterrissage correspondante, ainsi que son orientation ;
> a2) on vérifie, de façon répétitive, si une hauteur caractéristique qui dépend de l'altitude actuelle de l'aéronef et de l'altitude de l'aéroport est située à l'intérieur d'une fenêtre de détection en hauteur (prédéterminée) ;
> a3) dès que ladite hauteur caractéristique est située à l'intérieur de ladite fenêtre de détection, on calcule, de façon répétitive, pour chacune desdites pistes d'atterrissage, un écart angulaire entre l'orientation géographique de la piste d'atterrissage correspondante et une droite passant à la fois par la position actuelle de l'aéronef et le seuil de cette piste d'atterrissage, en tenant compte des informations déterminées à l'étape a1), ces écarts angulaires étant calculés pour chaque piste d'atterrissage de façon répétitive, et ceci jusqu'à ce que ladite hauteur caractéristique soit de nouveau située hors de ladite fenêtre de détection ; et
> a4) à ce moment, on détermine l'une desdites pistes d'atterrissage en tenant compte des différents écarts angulaires calculés à l'étape a3).

Dans ce cas, avantageusement, à l'étape a1), on détermine l'orientation d'une piste d'atterrissage à partir de coordonnées en latitude et en longitude du seuil (ou extrémité amont) de cette piste d'atterrissage et de coordonnées en latitude et en longitude de la fin (ou extrémité aval) de cette piste d'atterrissage.

En outre, de façon avantageuse, à l'étape a2) :

- on détermine, comme hauteur caractéristique, la valeur médiane entre les valeurs suivantes : Hp-Ha, Hra et HO, avec :

  - Hp l'altitude baro-inertielle courante de l'aéronef ;
  - Ha l'altitude de l'aéroport ;
  - Hra l'altitude radio-altimétrique courante de l'aéronef ; et
  - HO une valeur de hauteur prédéterminée ; et

- on vérifie que cette hauteur caractéristique est située dans ladite fenêtre de détection qui est limitée par deux valeurs de hauteur, minimale et maximale, prédéterminées.

De plus, avantageusement, à l'étape a3), on calcule ledit écart angulaire pour une piste d'atterrissage quelconque d'indice k, en tenant compte d'une orientation $\theta AMk$ qui est calculée à partir des expressions suivantes :

- si $\sin(\mu AC - \mu THRk) < 0$, $\theta AMk = \arccos\left(\dfrac{\sin(\lambda AC) - \sin(\lambda THRk).\cos(\rho AMk)}{\sin(\rho AMk).\cos(\lambda THRk)}\right)$

- sinon, $\theta AMk = 2\pi - \arccos\left(\dfrac{\sin(\lambda AC) - \sin(\lambda THRk).\cos(\rho AMk)}{\sin(\rho AMk).\cos(\lambda THRk)}\right)$

- $\rho AMk = 2.R.\arcsin\sqrt{\sin^2\left(\dfrac{\lambda THRk - \lambda AC}{2}\right) + \cos(\lambda THRk).\cos(\lambda AC).\sin^2\left(\dfrac{\mu THRk - \mu AC}{2}\right)}$

dans lesquelles :

- $\lambda THRk$ et $\mu THRk$ sont les coordonnées en latitude et en longitude du seuil de ladite piste d'atterrissage d'indice k ;
- $\lambda AC$ et $\mu AC$ sont les coordonnées courantes en latitude et en longitude de l'aéronef ; et
- R est le rayon de la terre.

En outre, de façon avantageuse, à l'étape a4) :

- on calcule la moyenne cumulative, pour chaque piste d'atterrissage, de tous les écarts angulaires correspondants calculés à l'étape a3) ;
- on compare entre elles les différentes moyennes cumulatives ainsi calculées ; et
- on détermine, comme piste d'atterrissage, celle dont la moyenne cumulative est la plus faible.

Dans un mode de réalisation particulier, à l'étape a), la détermination automatique a pour but de confirmer une détermination manuelle préalable de la piste d'atterrissage, faite par un opérateur (un membre d'équipage de l'aéronef).

La présente invention concerne également un dispositif d'aide au pilotage d'un aéronef, en particulier d'un avion de transport civil, lors d'une phase d'atterrissage (en course finale avant le début effectif du freinage lors du roulage au sol), ledit aéronef étant pourvu d'un système de freinage automatique qui est susceptible de freiner automatiquement l'aéronef au sol en fonction d'un mode de freinage sélectionné, ledit système de freinage automatique comprenant une pluralité de modes de freinage différents réalisant respectivement des freinages d'intensités différentes.

Selon l'invention, ledit dispositif est conforme à la revendication 11.

En outre, avantageusement, ledit dispositif comporte de plus :

- des moyens de reconfiguration automatique du système de freinage automatique ; et/ou
- des moyens susceptibles d'inhiber au moins lesdits moyens d'émission d'une alerte.

Par ailleurs, dans un mode de réalisation préféré, ledit dispositif de détermination de piste est destiné à déterminer automatiquement une piste d'atterrissage de l'aéroport (qui est muni d'une pluralité de pistes d'atterrissage), et il comporte, à cet effet, de façon avantageuse :

- des premiers moyens pour déterminer automatiquement, lors d'une phase d'atterrissage, pour chacune des pistes d'atterrissage de l'aéroport, les coordonnées du seuil de la piste d'atterrissage correspondante, ainsi que son orientation ;
- des deuxièmes moyens pour vérifier, de façon répétitive, si une hauteur caractéristique qui dépend de l'altitude actuelle de l'aéronef et de l'altitude de l'aéroport est située à l'intérieur d'une fenêtre de détection en hauteur prédéterminée ;
- des troisièmes moyens pour calculer, de façon répétitive, dès que ladite hauteur caractéristique est située à l'intérieur de ladite fenêtre de détection, pour chacune desdites pistes d'atterrissage, un écart angulaire entre l'orientation géographique de la piste d'atterrissage correspondante et une droite passant par la position actuelle de l'aéronef et le seuil de cette piste d'atterrissage, en tenant compte des informations déterminées par lesdits premiers moyens, ces écarts angulaires étant calculés pour chaque piste d'atterrissage de façon répétitive et ceci jusqu'à ce que ladite hauteur caractéristique soit de nouveau située hors de ladite fenêtre de détection ; et
- des quatrièmes moyens pour déterminer l'une desdites pistes d'atterrissage, en tenant compte des écarts angulaires calculés par lesdits troisièmes moyens.

Les figures du dessin annexé feront bien comprendre comment l'invention peut être réalisée. Sur ces figures, des références identiques désignent des éléments semblables.

La figure 1 est le schéma synoptique d'un dispositif d'aide au pilotage conforme à l'invention.

La figure 2 illustre schématiquement une phase de roulage d'un aéronef sur une piste d'atterrissage lors d'une phase d'atterrissage.

La figure 3 illustre schématiquement des moyens de calcul faisant partie d'un dispositif d'aide au pilotage conforme à l'invention.

La figure 4 est un schéma permettant d'expliquer le fonctionnement d'un réseau de neurones utilisé par les moyens de calcul de la figure 3.

La figure 5 est le schéma synoptique d'un dispositif de détection automatique d'une piste d'atterrissage qui fait partie d'un dispositif d'aide au pilotage conforme à l'invention.

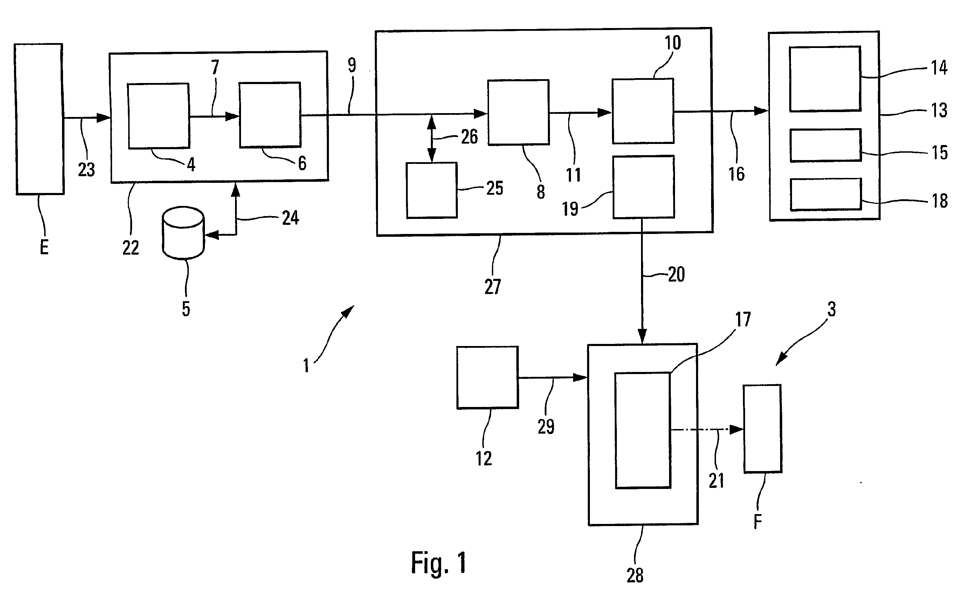

Le dispositif 1 conforme à l'invention et représenté schématiquement sur la figure 1, est destiné à aider au pilotage d'un aéronef A, en particulier d'un avion de transport civil, lors d'une phase d'atterrissage comprenant :

- une approche finale d'un aéroport ;
- un atterrissage proprement dit sur une piste d'atterrissage 2 de cet aéroport ; et
- un roulage sur cette piste d'atterrissage 2 après cet atterrissage.

La présente invention est appliquée à un aéronef A qui est équipé d'un système de freinage automatique 3 (faisant partie dudit dispositif 1). De façon usuelle, lorsqu'il est activé, un tel système de freinage automatique 3 actionne automatiquement des éléments de freinage F, tels que des freins de l'aéronef A notamment, dans le but de freiner l'aéronef A lors d'un roulage au sol. L'intensité du freinage (c'est-à-dire l'importance de l'ordre de freinage appliqué auxdits éléments de freinage F) est fonction d'un mode de freinage qui a été préalablement sélectionné, parmi une pluralité de modes de freinage possibles. A cet effet, ledit système de freinage 3 comporte, de façon usuelle, des moyens 12 permettant à un membre d'équipage de sélectionner manuellement l'un desdits modes de freinage possibles.

Selon l'invention, ledit dispositif 1 comporte de plus, comme représenté sur la figure 1 :

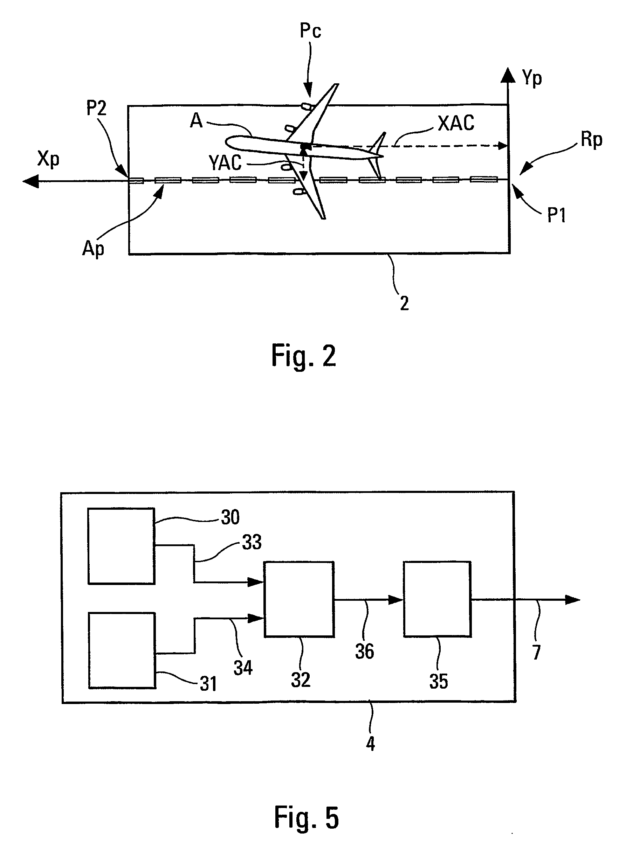

- un ensemble E de sources d'informations usuelles, qui sont en mesure de déterminer les valeurs actuelles de différents paramètres (position, altitude, ...) de l'aéronef A, précisés ci-dessous ;
- un dispositif 4 permettant de déterminer une piste d'atterrissage de l'aéroport de destination lors de la phase d'atterrissage, cet aéroport de destination étant muni d'une pluralité de pistes d'atterrissage différentes ;
- une base de données 5 qui comporte des caractéristiques de toutes les pistes d'atterrissage au moins de l'aéroport de destination prévu et qui permet de fournir des caractéristiques (précisées ci-dessous) de la piste d'atterrissage 2 déterminée par le dispositif 4 ;
- des moyens 6 qui sont reliés par l'intermédiaire d'une liaison 7 audit dispositif 4 et qui sont susceptibles de déterminer la position courante Pc de l'aéronef A, dans un repère Rp lié à la piste d'atterrissage 2 déterminée et représentée sur la figure 2 ;
- des moyens 8 qui sont reliés par l'intermédiaire d'une liaison 9 auxdits moyens 6 et qui sont formés de manière à estimer, dès que l'aéronef A passe à une hauteur donnée au-dessus du niveau de ladite piste d'atterrissage 2 déterminée [par exemple à 500 pieds (environ 150 mètres)], une distance minimale de freinage LD qui représente la distance le long de la piste d'atterrissage 2 jusqu'à l'arrêt de l'aéronef A sur cette piste d'atterrissage 2, comme précisé ci-dessous. Lesdits moyens 8 estiment cette distance minimale de freinage LD, à l'aide de la position courante Pc déterminée par lesdits moyens 6, d'un plan de descente standard vers ladite piste d'atterrissage déterminée 2, et d'un modèle de performance de l'aéronef A (qui est calibré sur les capacités de freinage du mode de freinage actuel, qui a été présélectionné par un membre d'équipage sur ledit système de freinage automatique 3 à l'aide des moyens 12). A cet effet, le dispositif 1 comporte des moyens non représentés et intégrés par exemple dans le système 3, pour déterminer le mode de freinage qui est actuellement sélectionné et pour transmettre cette information auxdits moyens 8 ;
- des moyens 10 qui sont reliés par l'intermédiaire d'une liaison 11 auxdits moyens 8 et qui sont destinés à comparer la distance minimale de freinage LD déterminée par lesdits moyens 8 à la longueur LRWY de la piste d'atterrissage 2, reçue de la base de données 5 ; et
- des moyens 13 activables précisés ci-dessous, qui sont susceptibles d'émettre automatiquement (lorsqu'ils sont activés) une alerte visuelle et/ou une alerte sonore dans le poste de pilotage de l'aéronef A dans le but :

  ▪ d'informer l'équipage que la capacité de freinage du mode de freinage actuellement sélectionné sur ledit système de freinage automatique 3 ne sera pas suffisante pour arrêter de manière sûre l'aéronef A sur ladite piste d'atterrissage 2 ; et
  ▪ de l'inciter à sélectionner, sur ledit système de freinage automatique 3, un mode de freinage présentant une intensité de freinage plus importante que celle dudit mode de freinage actuellement sélectionné.

Lesdits moyens 13 sont uniquement activés (automatiquement) lorsque les moyens 10 les informent (via une liaison 16) que la distance minimale de freinage LD est supérieure à la longueur LRWY de la piste d'atterrissage 2, et tant que ceci est le cas.

Cette ou ces alertes contre un risque de sortie de piste sont, de préférence, activées après une durée prédéterminée (correspondant à une durée de confirmation) après que les moyens 10 aient détecté que la distance minimale de freinage LD est supérieure à la longueur LRWY de la piste d'atterrissage 2.

Lesdits moyens 13 sont susceptibles notamment d'engendrer :

- une alerte visuelle sur un écran de visualisation 14 [notamment dans le poste de pilotage via un message textuel tel que "Increase Auto-Brake Setting" (c'est-à-dire "augmenter la sélection de freinage automatique"), en particulier sur un moyen d'affichage de type PFD ou ND] ou par l'intermédiaire d'un voyant lumineux non représenté ; et
- une alerte sonore par l'intermédiaire de moyens 15 usuels (sous forme d'un message audio, continu ou répétitif, notamment du type "Increase Auto-Brake Setting"). Cette alerte sonore peut être une alerte vocale, ou bien tout autre type de son qui est émis dans l'aéronef A.

Ainsi, grâce à l'invention, lors d'un risque de sortie longitudinale de la piste d'atterrissage 2 (déterminée et effectivement utilisée) en cas d'utilisation d'un système de freinage automatique 3 sur l'aéronef A, c'est-à-dire lorsque la distance minimale de freinage LD de l'aéronef A (qui dépend des capacités de freinage du mode de freinage actuellement sélectionné sur le système de freinage automatique 3) est supérieure à la longueur LRWY de cette piste 2 et que l'arrêt de l'aéronef A aura donc lieu, longitudinalement, au-delà de l'extrémité aval P2 de la piste 2, le dispositif 1 prévient l'équipage de l'aéronef A de l'existence de ce risque, et ceci par une alerte visuelle et/ou par une alerte sonore. De plus, cette ou ces alertes sont émises tant que le risque de sortie de piste subsiste.

Ledit dispositif 1 comporte, de plus, des moyens d'inhibition 18 qui sont susceptibles d'inhiber automatiquement lesdits moyens d'alerte 13. De préférence, les moyens d'inhibition 18 inhibent automatiquement lesdits moyens d'alerte 13, dès que l'aéronef A passe lors de la descente à une hauteur de vol donnée [par exemple dès l'entrée dans l'arrondi lors de l'atterrissage, c'est-à-dire généralement vers 50 pieds (environ 15 mètres) de hauteur] au-dessus de la piste d'atterrissage 2, et cette inhibition est réalisée jusqu'à l'activation dudit système de freinage automatique 3 lors du roulage au sol. Le système de freinage automatique 3 commence à mettre en oeuvre le freinage dès qu'il a été activé, ce freinage étant réalisé selon le mode de freinage préalablement sélectionné sur ledit système 3. Ainsi, le dispositif 1 ne perturbe pas l'équipage de l'aéronef A dans cette phase de vol, correspondant à l'atterrissage proprement dit, qui est une phase critique.

Dans un mode de réalisation particulier, le dispositif 1 conforme à l'invention comporte également des moyens (non représentés) pour comparer le mode de freinage actuellement sélectionné au mode de freinage maximal (c'est-à-dire engendrant l'intensité de freinage maximale) du système de freinage automatique 3, et lesdits moyens 13 sont activés pour émettre une alerte, uniquement lorsque ledit mode de freinage actuellement sélectionné ne correspond pas audit mode de freinage maximal. Le dispositif 1 n'émet donc pas d'alerte si le mode de freinage maximal est déjà sélectionné sur le système de freinage automatique 3.

Ledit dispositif 1 comporte, de plus, des moyens de reconfiguration automatique 19 qui sont associés au système de freinage automatique 3, comme illustré par une liaison 20, dans le but de le reconfigurer. Plus précisément, si, à la fin d'une durée prédéterminée après l'émission d'une alerte par les moyens d'alerte 13, l'équipage n'a pas sélectionné un autre mode de freinage, les moyens de reconfiguration automatique 19 sélectionnent automatiquement, sur ledit système de freinage automatique 3, un mode de freinage présentant une intensité de freinage plus importante que celle dudit mode de freinage actuellement sélectionné.

Dans un mode de réalisation préféré, lesdits moyens de reconfiguration automatique 19 sont formés de manière à réaliser une telle sélection automatique de proche en proche, et ils comportent, à cet effet, des moyens intégrés (non représentés) :

a) pour choisir automatiquement le mode de freinage d'intensité de freinage immédiatement supérieure à celle du mode de freinage actuel qui est soit le mode de freinage actuellement sélectionné, soit le mode de freinage choisi à l'étape a) précédente ; et
b) pour vérifier automatiquement après un temps de confirmation réglable (par exemple une seconde) si ce mode de freinage choisi est suffisant pour arrêter de manière sûre l'aéronef A sur la piste d'atterrissage 2.

Les étapes successives a) et b) sont répétées automatiquement jusqu'à l'obtention d'un mode de freinage suffisant à l'étape b), ce mode de freinage suffisant étant alors sélectionné automatiquement sur ledit système de freinage automatique de l'aéronef A, à l'aide de moyens (non représentés) du système 3 qui coopèrent avec lesdits moyens 19.

Dans un mode de réalisation préféré, ledit système de freinage automatique 3 comporte :

- des moyens 17 qui déterminent automatiquement un ordre de freinage qu'ils transmettent aux éléments de freinage F, notamment aux freins de l'aéronef A, comme illustré par une liaison 21 en traits mixtes ;
- un calculateur 28 comprenant lesdits moyens 17 ;
- lesdits moyens 12, par exemple un bouton rotatif ou un bouton-poussoir, qui permettent à un membre d'équipage de sélectionner manuellement un mode de freinage et qui sont, par exemple, reliés par une liaison 29 audit calculateur 28 ; et
- des moyens (non représentés) permettant d'activer ledit système 3.

Dans un mode de réalisation préféré :

- lesdits moyens 4 et 6 font partie d'un calculateur de navigation 22 qui est relié par l'intermédiaire d'une liaison 23 audit ensemble E de sources d'informations, et par l'intermédiaire d'une liaison 24 à ladite base de données 5 qui lui est associée. Ce calculateur de navigation 22 peut être un système de gestion de vol de type FMS ("Flight Management System" en anglais) ou un système de navigation aéroportuaire de type ANS ("Airport Navigation System" en anglais). Si le calculateur de navigation 22 est un système de gestion de vol, ladite base de données 5 est une base de données de navigation usuelle, et si ledit calculateur de navigation 22 est un système de navigation aéroportuaire, ladite base de données 5 est une base de données aéroportuaires usuelle ;
- lesdits moyens d'alerte 13, qui élaborent les alarmes et les messages précités, font partie d'un calculateur d'alarme de vol de type FWC ("Flight Warning Computer" en anglais) ;

- lesdits moyens 8, 10 et 19, ainsi que des moyens 25 précisés ci-dessous, font partie d'un calculateur 27 de pilotage et de guidage usuel, tel qu'un pilote automatique ; et
- lesdits moyens 17 font partie d'un calculateur de freinage 28 usuel.

En outre, dans un mode de réalisation particulier non représenté, lesdits moyens 8, 10, 17, 19 et 25 peuvent également faire partie d'un seul et même calculateur de freinage usuel.

On notera que, dans le cas où le dispositif 1 dispose d'une interface homme/machine permettant de sélectionner l'état prévisionnel de la piste d'atterrissage 2, la génération de l'alerte et la reconfiguration automatique sont réalisées en supposant que l'état de la piste 2 est celui sélectionné. Si ce n'est pas le cas, une hypothèse conservatrice est prise en compte, selon laquelle la piste 2 est mouillée ou contaminée.

On sait que l'aéroport de destination peut être muni de plusieurs pistes d'atterrissage, et on ne connaît donc pas a priori la piste d'atterrissage qui sera effectivement utilisée. Cette dernière peut être déterminée :

- soit par les coordonnées (latitude et longitude) du seuil P1 et de la fin P2 de cette piste 2, desquelles on peut alors déduire sa longueur et son orientation magnétique ;
- soit par les coordonnées (latitude et longitude) du seuil P1, la longueur LRWY et l'orientation magnétique de cette piste 2.

Dès lors, deux solutions existent pour déterminer la piste d'atterrissage à utiliser :

- soit cette piste est désignée par le pilote préalablement, et on suppose que l'aéronef A atterrira sur cette piste présélectionnée ;
- soit cette piste est détectée automatiquement, en analysant la position de l'aéronef A lors de la phase d'atterrissage jusqu'à proximité du sol, par rapport à l'ensemble des pistes d'atterrissage possibles, qui sont répertoriées dans la base de données 5 (navigation, aéroport, ...), comme précisé ci-dessous.

En connaissant la piste d'atterrissage 2 (désignée ou détectée automatiquement), il devient possible de positionner l'aéronef A vis-à-vis de cette piste d'atterrissage 2 par l'intermédiaire d'un repère orthonormal direct, dont l'origine est le seuil P1 de cette piste 2 et dont l'axe longitudinal est l'axe Ap de cette piste 2. Il est également possible de positionner l'aéronef A par rapport à un plan de descente nominal ou standard [en général de l'ordre de 3° de pente aboutissant à 50 pieds (environ 15 mètres) au seuil P1 de la piste 2].

Le dispositif 1 conforme à l'invention comporte également lesdits moyens 25 qui sont, par exemple, reliés par l'intermédiaire d'une liaison 26 à ladite liaison 9 et qui sont destinés à vérifier si l'aéronef A est bien en train d'atterrir sur la piste d'atterrissage 2 déterminée par ledit dispositif 4. Comme lesdits moyens 25 font partie d'un calculateur 27 qui est indépendant du calculateur de navigation 22, le dispositif 1 est en mesure de vérifier la vraisemblance de la piste d'atterrissage 2 déterminée par ledit dispositif 4 (qui est intégré dans ledit calculateur de navigation 22) par des moyens indépendants, ce qui permet d'augmenter la fiabilité de la détermination. Lesdits moyens 25 permettent ainsi d'améliorer la sécurité de fonctionnement de la protection contre un risque de sortie de piste.

Pour ce faire, lesdits moyens 25 disposent de :

- l'orientation magnétique de la piste d'atterrissage 2 (QFU), qui est soit issue de la base de données 5, soit calculée de la manière précisée ci-dessous;
- la position latérale de l'aéronef A (ordonnée) dans le repère orthonormal Rp lié à la piste d'atterrissage 2, qui est déterminée comme précisé ci-dessous ;
- l'altitude radio-altimétrique courante de l'aéronef A, qui est mesurée par des moyens usuels faisant partie de l'ensemble 3 de sources d'informations ; et
- la route magnétique courante suivie par l'aéronef A, qui est également mesurée par des moyens usuels faisant partie de l'ensemble 3 de sources d'informations.

Lesdits moyens 25 vérifient, lorsque l'aéronef A atteint une hauteur radio-altimétrique donnée lors de la descente pendant la phase d'atterrissage, par exemple à 500 pieds (environ 150 mètres), si :

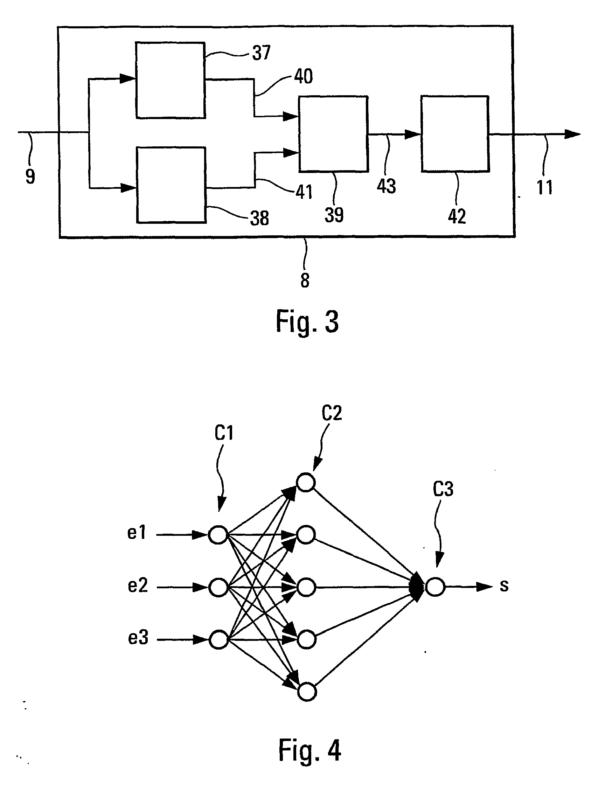

- l'écart angulaire entre l'orientation magnétique de la piste d'atterrissage 2 déterminée et la route magnétique courante de l'aéronef A est supérieur ou non à un seuil donné en valeur absolue, par exemple 5° ; ou
- si l'écart métrique de la position latérale par rapport à l'axe Ap (représenté en traits interrompus sur la figure 3) de la piste d'atterrissage 2 déterminée [égal à la position latérale de l'aéronef (ordonnée) dans le repère orthonormal Rp lié à la piste d'atterrissage 2 déterminée] est supérieur ou non à un seuil donné en valeur absolue, par exemple 300 mètres.

En effet, il est supposé que l'aéronef A est aligné sur l'axe Ap de la piste 2, sous une hauteur de 500 pieds par rapport à l'altitude de la piste d'atterrissage 2 effective. Grâce à la vérification mise en oeuvre par lesdits moyens 25, le dispositif 1 est capable de vérifier que l'aéronef A atterrit effectivement sur la piste d'atterrissage 2 déterminée.

La détermination d'une piste d'atterrissage 2, mise en oeuvre par ledit dispositif 4 et précisée ci-dessous, permet d'initier une requête vers la base de données 5. Cette requête permet de récupérer les caractéristiques de la piste d'atterrissage 2 ainsi déterminée. Deux types de caractéristiques existent alors en fonction du type de base de données 5. Plus précisément :

A/ si ladite base de données 5 est une base de données de navigation, elle contient les coordonnées en latitude et en longitude du seuil P1 (extrémité amont) de la piste 2, ainsi que la longueur et l'orientation magnétique (QFU) de cette piste 2 ;

B/ si la base de données 5 est une base de données aéroportuaires, elle contient les coordonnées en latitude et en longitude du seuil P1 de la piste 2, ainsi que les coordonnées en latitude et en longitude de la fin P2 (extrémité aval) de cette piste 2 (figure 2).

L'orientation de la piste 2 correspond :

- dans le cas A précédent, à l'orientation magnétique de la piste d'atterrissage 2 qui est saisie, de façon usuelle, par l'équipage dans la base de données 5 via un système de gestion de vol lors de la préparation du vol ; et
- dans le cas B précédent, à l'orientation géographique de la piste d'atterrissage 2 qui est calculée à partir des coordonnées géographiques de la piste d'atterrissage 2 issues de la base de données aéroportuaires.

Dans ce cas B, cette orientation QFU est calculée à partir des coordonnées en latitude et en longitude suivant la norme WGS 84 du seuil P1 ($\lambda$THR, $\mu$THR) de la piste 2 et de la fin P2 ($\lambda$END, $\mu$END) de la piste 2. Ce calcul est tel que :

- si $\sin(\mu\text{END}-\mu\text{THR}) < 0$,

$$\text{alors } QFU = \arccos\left(\frac{\sin(\lambda\text{END}) - \sin(\lambda\text{THR}).\cos(\text{LRWY})}{\sin(\text{LRWY}).\cos(\lambda\text{THR})}\right)$$

- si $\sin(\mu\text{END}-\mu\text{THR}) \geq 0$,

$$\text{alors } QFU = 2\pi - \arccos\left(\frac{\sin(\lambda\text{END}) - \sin(\lambda\text{THR}).\cos(\text{LRWY})}{\sin(\text{LRWY}).\cos(\lambda\text{THR})}\right)$$

Dans ces expressions, LRWY est la longueur de la piste 2, en mètre, calculée comme suit :

$$\text{LRWY} = 2.R.\arcsin\sqrt{\sin^2\left(\frac{\lambda\text{THR} - \lambda\text{END}}{2}\right) + \cos(\lambda\text{THR}).\cos(\lambda\text{END}).\sin^2\left(\frac{\mu\text{THR} - \mu\text{END}}{2}\right)}$$

avec R le rayon de la terre, en mètre.

Les moyens 6 peuvent alors calculer les coordonnées de la position de l'aéronef A dans le repère orthonormé Rp associé à la piste d'atterrissage 2 déterminée. La position longitudinale de l'aéronef A sur la piste d'atterrissage 2 correspond à l'abscisse XAC de la position de l'aéronef A dans ce repère orthonormé Rp, comme représenté sur la figure 2.

La position latérale de l'aéronef A dans le repère Rp (qui présente un axe longitudinal Xp en abscisse et un axe latéral Yp en ordonnée et qui est défini par rapport au seuil P1 de la piste 2) est calculée à partir des expressions suivantes :

$$\begin{cases} \text{XAC} = \rho\text{AM}.\cos(\theta\text{AM} - QFU) \\ \text{YAC} = \rho\text{AM}.\sin(\theta\text{AM} - QFU) \end{cases}$$

dans lesquelles :

- XAC est donc la position longitudinale de l'aéronef A dans le repère Rp, exprimée en mètre ;

- YAC est la position latérale de l'aéronef A dans le repère Rp, exprimée en mètre ;
- ρAM est la distance de l'aéronef A par rapport au seuil P1 de la piste 2, exprimée en mètre ;
- θAM est le cap géographique de l'aéronef A, exprimé en degrés ; et
- QFU est le cap géographique de la piste 2, exprimé en degrés, et obtenu comme précisé ci-dessus.

La distance ρAM de l'aéronef A par rapport au seuil P1 de la piste 2 est calculée à partir des coordonnées courantes $\{\lambda AC, \mu AC\}$ de l'aéronef A, de préférence de type GPS, et des coordonnées géographiques $\{\lambda THR, \mu THR\}$ du seuil P1 de la piste 2 (issues de la base de données 5) :

$$\rho AM = 2.R.\arcsin \sqrt{\sin^2\left(\frac{\lambda THR - \lambda AC}{2}\right) + \cos(\lambda THR).\cos(\lambda AC).\sin^2\left(\frac{\mu THR - \mu AC}{2}\right)}$$

Le cap géographique θAM de l'aéronef A est calculé à partir des coordonnées GPS $\{\lambda AC, \mu AC\}$ de l'aéronef A :

- si $\sin(\mu AC - \mu THR) < 0$, $\theta AM = \arccos\left(\dfrac{\sin(\lambda AC) - \sin(\lambda THR).\cos(\rho AM)}{\sin(\rho AM).\cos(\lambda THR)}\right)$

- sinon, $\theta AM = 2\pi - \arccos\left(\dfrac{\sin(\lambda AC) - \sin(\lambda THR).\cos(\rho AM)}{\sin(\rho AM).\cos(\lambda THR)}\right)$

Par ailleurs, dès que l'aéronef A passe à une hauteur donnée, par exemple à 500 pieds (environ 150 mètres), au-dessus du niveau de la piste 2, lesdits moyens 8 déterminent la distance minimale de freinage LD de l'aéronef A. Pour ce faire, lesdits moyens 8 comportent, comme représenté sur la figure 3 :

- des moyens 37 pour calculer, à l'aide de la position courante Pc de l'aéronef A par rapport au plan de descente standard (ou nominal), une distance APD qui est relative à une phase aérienne au-dessus de la piste d'atterrissage 2 ;
- des moyens 38 pour calculer, à l'aide dudit modèle de performance, une distance GPD de roulage au sol entre le toucher du sol par l'aéronef A et l'arrêt définitif dudit aéronef A. Ledit modèle de performance dépend d'un état prévisionnel (sec, mouillé, contaminé) de la piste d'atterrissage, qui est par exemple sélectionné par le pilote de l'aéronef A ; et
- des moyens 39 qui sont reliés par l'intermédiaire de liaisons 40 et 41 respectivement auxdits moyens 37 et 38 et qui font la somme desdites distances APD et GPD de manière à obtenir une distance minimale, à laquelle on soustrait la distance longitudinale entre la position courante de l'aéronef et le seuil de la piste pour obtenir ladite distance minimale de freinage.

Dans un mode de réalisation préféré, ladite distance APD correspond à la distance couverte, dans la phase aérienne, par l'aéronef A à la vitesse air vraie de type TAS ("True Air Speed" en anglais), et ceci pendant une durée donnée, par exemple pendant 5 secondes. De préférence, lesdits moyens 37 réalisent au moins trois calculs différents, en fonction de la hauteur H de l'aéronef A par rapport à la piste d'atterrissage 2, à savoir :

a) pour une hauteur H supérieure à 500 pieds (environ 1 50 mètres) ;
b) pour une hauteur H comprise entre 500 pieds et 50 pieds (environ 15 mètres) ; et
c) pour une hauteur H inférieure à 50 pieds.

Dans la situation a), lesdits moyens 37 calculent ladite distance APD1 à l'aide de l'expression suivante :

$$APD1 = (Vapp + WS).TAPD$$

dans laquelle :

- APD1 est donc la distance (en mètres) de la phase aérienne pour cette situation a) ;
- TAPD est un temps caractéristique (en secondes) de cette phase aérienne ;
- Vapp est la vitesse d'approche prédite de type TAS, qui est exprimée en m/s ; et
- WS est la vitesse longitudinale prédite du vent, qui est également exprimée en m/s.

De plus, cette distance APD1 doit vérifier la condition suivante :

$$APD1 > APDmin$$

où APDmin est une valeur minimale, exprimée en mètres.

Dans la situation b), lesdits moyens 37 calculent ladite distance APD2 à l'aide de l'expression suivante :

$$APD2 = GS1.TAPD$$

dans laquelle GS1 est la vitesse sol courante.

Cette distance APD2 doit également vérifier la condition suivante :

$$APD2 > APDmin$$

En outre, dans la situation c), lesdits moyens 37 calculent ladite distance APD3 à l'aide de l'expression suivante :

$$APD3 = GS2.TAPD.H/50$$

dans laquelle :

- GS2 est la vitesse sol (en m/s) qui a été enregistrée à une hauteur de 50 pieds ; et
- H est la hauteur courante de l'aéronef A (en pieds).

De plus, les conditions suivantes doivent être vérifiées dans cette situation c) :

* GS2.TAPD > APDmin
* $0 \leq H/50 \leq 1$

Dans les expressions précédentes, la durée caractéristique TAPD de la phase aérienne présente une valeur prédéterminée, de préférence 5 secondes, et la distance minimale APDmin présente également une valeur prédéterminée, par exemple 400 mètres.

En outre, la vitesse Vapp peut être obtenue à partir d'une vitesse Vappfms, et ceci par deux méthodes différentes. La vitesse Vappfms est une vitesse corrigée de type CAS ("Calibrated Airspeed" en anglais) qui est affichée sur une page de performance d'approche usuelle relative à un système de gestion de vol.

Selon une première méthode (préférée), on calcule cette vitesse Vapp à l'aide de l'expression suivante :

$$Vapp = Vappfms.\sqrt{\rho 0 / \rho}$$

dans laquelle :

- Vappfms est donc la vitesse affichée sur la page de performance d'approche ;
- $\rho$ est la densité de l'air à l'aéroport de destination ; et
- $\rho 0 = 1,225 \text{ kg/m}^3$.

En outre, selon une seconde méthode (simplifiée), on peut calculer la vitesse Vapp à l'aide de l'expression suivante :

$$Vapp = Vappfms.f(Zp)$$

dans laquelle :

- f(Zp) est une fonction tabulée de l'attitude géométrique de l'aéroport, qui représente le rapport $\sqrt{\rho 0 / \rho}$ (qui vaut 1 à 0 pied et 1,25 à 15 000 pieds) ; et
- Zp est l'altitude pression prédite à l'aéroport de destination, exprimée en pieds.

En outre, la vitesse WS précitée est la vitesse du vent longitudinal, qui est prédite le long de l'axe Ap de la piste 2. Cette vitesse WS est déduite de valeurs entrées dans le système de gestion de vol sur la page d'approche de performance, à partir de la direction du vent et de la vitesse du vent (entrées par l'équipage sur cette page) et à partir de la direction de l'axe Ap de la piste d'atterrissage 2, contenue dans la base de données 5.

En outre :

- la vitesse GS1 est la vitesse sol courante mesurée (en m/s), qui peut notamment être calculée de façon usuelle par un système inertiel, éventuellement corrigée à l'aide de valeurs issues d'un système de positionnement par satellites ;
- la vitesse GS2 est la vitesse sol courante mesurée à une hauteur de 50 pieds au-dessus de la piste d'atterrissage 2, cette vitesse étant exprimée en m/s ; et
- la hauteur H est la hauteur courante de l'aéronef A, obtenue par un radioaltimètre et exprimée en pieds.

Par ailleurs, lesdits moyens 38 calculent la distance GPD en utilisant un modèle de performance de l'aéronef A, qui est calibré sur les capacités de freinage du mode de freinage actuellement sélectionné sur ledit système de freinage automatique 3, et qui dépend de l'état prévisionnel de la piste 2. Cet état peut notamment être entré par le pilote, par l'intermédiaire d'un moyen d'entrée usuel (non représenté). Dans le cadre de la présente invention, la piste peut en particulier être sèche, mouillée, ou contaminée (c'est-à-dire lorsque plus de 25% de la surface de la piste est recouverte par de la neige, de la glace ou de l'eau stagnante).

La distance GPD représente la distance couverte par l'aéronef A entre le moment où son train d'atterrissage principal touche la piste d'atterrissage 2 et son arrêt complet sur cette piste 2.

Lesdits moyens 38 utilisent un réseau de neurones, tel qu'illustré sur la figure 4. On sait qu'un tel réseau comporte une couche d'entrées C1 comprenant une pluralité d'entrées e1, e2, e3, ... (de valeurs xi), une couche intermédiaire C2 (de valeurs si,j), et une couche de sortie C3 qui fournit la valeur de sortie s. Le modèle utilisé présente les caractéristiques suivantes :

$$
\begin{cases}
x_i = e_{i,j} \\
s_{i,1} = \alpha_i.e_{i,1} + \beta_i \\
s_{j,2} = \theta\left(\sum_{i=1}^{ne} a_{i,j}.s_{i,1} + b_j\right) \quad \text{avec } \theta(x) = x / \left(1 + |x|\right) \\
s = \sum_{j=1}^{n} C_j.s_{j,2} \\
y = (s - \beta 0) / \alpha 0
\end{cases}
$$

avec $(\alpha_i ; \beta_i)_{i=o, ne}$ tels que
$$
\begin{cases}
-1 \le s_{i,1} \le +1 \\
-1 \le s \le +1
\end{cases}
$$

De plus, le nombre N de coefficients est égal à :

$$
\begin{cases}
N = nombre\left(\alpha_i ; \beta_i\right) + nombre\left(a_{i,j} ; b_j\right) + nombre\left(c_j\right) + nombre\left(\alpha 0 ; \beta 0\right) \\
N = ne.2 + n.(ne + 1) + n + 2 \\
N = n.(ne + 2) + 2.(ne + 1)
\end{cases}
$$

Lesdits moyens 38 réalisent les calculs généralement pour deux hauteurs H différentes de l'aéronef A, à savoir :

- pour une hauteur H supérieure à 500 pieds ; et
- pour une hauteur H inférieure à 500 pieds.

La distance GPD dépend de la configuration aérodynamique de l'aéronef A, c'est-à-dire de la position des becs et volets lors de l'atterrissage.

On présente d'abord le calcul concernant la distance GPD (désignée GPD1) pour une piste qui est sèche.

Premièrement, on calcule cette distance (désignée GPD1 a) pour une configuration de vol très hypersustentée, pour laquelle les becs et les volets sont complètement sortis, et qui est dite "FULL". Cette distance GPD1 a est calculée à l'aide d'une méthode non linéaire basée sur un modèle de réseau utilisant l'expression suivante :

$$GPD1a = Df1 + \Delta D1$$

dans laquelle :

- Df1 est la distance au sol dans la configuration "FULL" ; et
- $\Delta D1$ est une valeur prédéterminée.

Deuxièmement, on calcule cette distance (désignée GPD1 b) pour une configuration de vol hypersustentée correspondant à la configuration juste avant la configuration "FULL", pour laquelle les volets ne sont pas complètement sortis. Dans cette configuration de vol dite "CONF 3", la distance GPD1 b est déduite de la distance GPD1a précédente, à l'aide de l'expression suivante :

$$GPD1b = GPD1a + \Delta D2$$

dans laquelle $\Delta D2$ représente la différence de longueur pour la phase au sol entre les deux configurations considérées. Cette valeur est de préférence une valeur prédéterminée, par exemple 50 mètres.

Dans ce cas, le modèle utilisé (pour le réseau de neurones) comporte 6 entrées (ne = 6) qui concernent les valeurs suivantes (précisées ci-dessous) :

- le poids GW ;
- la température DISA ;
- l'altitude Zp ;
- la vitesse sol GS ;
- la vitesse du vent WS ; et
- le mode de freinage automatique utilisé.

Dans ce cas, le réseau comporte 20 neurones intermédiaires dans la couche C2 (n = 20), et un nombre de 174 coefficients (N = 174), à savoir 6 $\alpha i$, 6 pi, 120 ai,j, 20 bj, 20 cj, 1 $\alpha 0$ et 1 $\beta 0$. Le réseau de neurones fournit alors à la sortie la distance Df1 précitée.

On notera que, pour une hauteur H supérieure à 500 pieds :

- le poids GW est le poids d'atterrissage estimé à l'aéroport de destination, ce poids étant calculé par le système de gestion de vol et affiché sur la page de performance d'approche ;
- la température DISA est la différence de température prédite à l'aéroport de destination, qui est exprimée en °C ou en °K, entre une température OAT (qui est la température de l'air extérieur prédite à l'aéroport de destination, qui est fournie par le système de gestion de vol) et une température TISA (qui est la température ISA à l'altitude pression de l'aéroport). TISA est calculée de façon usuelle ;
- l'altitude Zp est l'altitude pression prédite à l'aéroport de destination, en pieds ;
- la vitesse GS est la vitesse sol prédite, en noeuds ;
- la vitesse du vent WS est la vitesse longitudinale prédite ; et
- le mode de freinage automatique utilisé correspond à celui sélectionné par un bouton rotatif de sélection du mode de braquage automatique.

En outre, pour une hauteur H inférieure à 500 pieds :

- le poids GW représente le poids courant ;
- la température DISA représente la différence de température ISA courante exprimée en °C ou en °K, à partir de la différence entre la température courante de l'air extérieur et la température ISA à l'altitude pression standard courante ;
- l'altitude Zp est l'altitude pression courante mesurée ;
- la vitesse sol GS est la vitesse sol courante mesurée ;
- la vitesse du vent WS est la vitesse du vent longitudinale courante, mesurée de façon usuelle ; et
- le mode de freinage automatique est le mode qui est actuellement sélectionné.

Lesdits moyens 38 peuvent calculer, à l'aide d'un réseau de neurones similaire, la distance GPD (désignée GPD2) pour une piste mouillée.

Dans ce cas, pour une configuration "FULL", ladite distance (désignée GPD2a) est calculée à l'aide de l'expression suivante :

$$GPD2A = Df2 + \Delta D3$$

dans laquelle :

- Df2 représente la distance au sol dans cette configuration "FULL" ; et
- $\Delta D3$ représente une valeur prédéterminée.

En outre, dans une configuration "CONF3", la distance (désignée GPD2b) de la phase au sol peut être déduite de la distance GPD2a précédente, à l'aide de l'expression suivante :

$$GPD2b = GPD2a + \Delta D4$$

dans laquelle $\Delta D4$ représente la différence de longueur pour la phase au sol entre les deux configurations considérées. Cette distance peut être égale à 50 mètres.

Dans ce cas, pour calculer la distance Df2, les entrées du réseau de neurones sont les mêmes que pour la distance Df1 précédente. Quant à la sortie du réseau de neurones, elle fournit donc cette distance Df2.

En outre, dans un mode de réalisation particulier, lesdits moyens 8 comportent de plus des moyens 42 qui sont, par exemple, reliés par l'intermédiaire d'une liaison 43 auxdits moyens 39 et qui permettent de translater des barres usuelles indiquant, par exemple sur l'écran de visualisation 14, la position d'arrêt. Ces moyens 42 augmentent les distances (pour une piste sèche et une piste mouillée) en fonction de la trajectoire courante de l'aéronef A à une hauteur inférieure à 500 pieds. Ces distances sont augmentées d'une valeur $\Delta X$ dans certaines conditions particulières. Dans un mode de réalisation particulier :

- si l'aéronef A est situé au-dessous d'une pente nominale (qui présente une valeur de 3° et dont l'origine est le point situé à 50 pieds au-dessus du seuil P1 de la piste d'atterrissage 2), les distances ne sont pas augmentées ;
- sinon :

  - si le point estimé à 50 pieds assurant que l'aéronef A va suivre un trajet de descente de 4° est situé en amont de la piste d'atterrissage 2, les distances ne sont pas augmentées ;
  - sinon, les distances sont augmentées de la distance $\Delta X$ suivante :

$$\Delta X = 0{,}3048 . (Z-50) / 4 + X$$

Dans cette dernière expression :

- Z est la hauteur (en pieds) de l'aéronef A au-dessus de la piste d'atterrissage 2 ; et
- X est la distance longitudinale (en mètres) de l'aéronef A par rapport au seuil P1 de la piste.

Par ailleurs, dans un mode de réalisation particulier, le dispositif 1 peut également comporter une interface homme/machine (affichage, ...), non représentée, permettant de positionner et d'afficher en temps réel un symbole illustrant la position courante Pc de l'aéronef A sur une carte d'aéroport visualisant la piste d'atterrissage 2 déterminée, par exemple de type "Electronic Moving Map". Dans ce cas, la distance minimale de freinage LD peut également être matérialisée par une symbologie appropriée sur la carte d'aéroport en donnant la conscience à l'équipage du risque de sortie (ou non) de la piste 2. A titre d'exemple, le symbole illustrant la position courante Pc de l'aéronef A peut se présenter sous la forme d'une barre qui est orthogonale à l'axe Ap de la piste 2 et qui se déplace suivant cet axe Ap. Ce symbole peut être rouge en cas de risque de sortie de piste, et vert en cas d'absence de risque de sortie de piste.

En outre, lesdits moyens 10 évaluent le risque de sortie de la piste 2, en comparant la distance minimale de freinage LD (estimée par lesdits moyens 8) à la longueur LRWY de la piste d'atterrissage 2. Pour ce faire, lesdits moyens 10 calculent l'écart $\Delta$ entre la longueur LRWY (issue de la base de données 5) de la piste d'atterrissage 2 et la distance minimale de freinage LD, calculée par les moyens 8 :

$$\Delta = \text{LRWY} - \text{LD}$$

Si cet écart $\Delta$ est positif, les moyens 10 concluent à une absence de dépassement de la fin P2 de la piste d'atterrissage 2, donc à l'absence d'un risque de sortie longitudinale de piste. En revanche, si l'écart $\Delta$ est négatif, lesdits moyens 10 détectent un risque de sortie longitudinale de piste.

Par ailleurs, ledit dispositif 4 qui permet de déterminer une piste d'atterrissage 2 d'un aéroport muni d'une pluralité de pistes d'atterrissage, peut, dans le cadre de la présente invention :

- soit correspondre à des moyens de détermination manuels (non représentés) tel qu'un moyen d'interface interactif (désignateur, écran tactile, ..., accompagné d'un écran dédié) qui est associé à un calculateur de navigation (par exemple de type FMC, ANC ou TAWS) et qui permet à un membre d'équipage de sélectionner manuellement une piste d'atterrissage ;
- soit être un dispositif qui permet de déterminer automatiquement une piste d'atterrissage, comme représenté sur la figure 5.

Dans ce dernier cas, ce dispositif 4 peut :

- soit être utilisé tel quel, pour déterminer automatiquement la piste d'atterrissage 2 ;
- soit être associé à des moyens de détermination manuels (non représentés), à l'aide desquels un membre d'équipage est en mesure de déterminer manuellement une piste d'atterrissage. Dans ce cas, le dispositif 4 a pour objet de déterminer automatiquement une piste d'atterrissage 2 qui est comparée à une piste d'atterrissage déterminée manuellement, afin de pouvoir confirmer cette détermination manuelle. En cas de désaccord entre une détermination manuelle et une détermination automatique, des moyens (non représentés) du dispositif 1 prévoient que la détermination automatique mise en oeuvre par le dispositif 4 prévaut.

Comme représenté sur la figure 5, ledit dispositif 4 comporte, dans un mode de réalisation préféré :

- des moyens 30 pour déterminer automatiquement, lors d'une phase d'atterrissage sur un aéroport muni d'une pluralité de pistes d'atterrissage, les coordonnées des seuils de chacune de ces pistes d'atterrissage, ainsi que leur orientation QFU ;
- des moyens 31 pour vérifier, de façon répétitive, si une hauteur caractéristique HAC qui dépend de l'altitude courante de l'aéronef A et de l'altitude de l'aéroport est située à l'intérieur d'une fenêtre de détection en hauteur (prédéterminée) ;
- des moyens 32 qui sont reliés par l'intermédiaire de liaisons 33 et 34 respectivement auxdits moyens 30 et 31 et qui sont formés de manière à calculer, de façon répétitive, dès que ladite hauteur caractéristique HAC est située à l'intérieur de ladite fenêtre de détection, pour chacune desdites pistes d'atterrissage, un écart angulaire entre l'orientation géographique de la piste d'atterrissage correspondante et une droite passant par la position actuelle de l'aéronef A et le seuil de cette piste d'atterrissage. Ces calculs prennent en compte les informations déterminées par lesdits moyens 30. Ces écarts angulaires sont calculés par les moyens 32 (pour chaque piste d'atterrissage) de façon répétitive et ceci jusqu'à ce que ladite hauteur caractéristique HAC soit de nouveau située hors de ladite fenêtre de détection ; et
- des moyens 35 qui sont reliés par l'intermédiaire d'une liaison 36 auxdits moyens 32 et qui sont formés de manière à déterminer l'une desdites pistes d'atterrissage, en tenant compte des écarts angulaires calculés par lesdits moyens 32, comme précisé ci-dessous, et à la transmettre par l'intermédiaire de la liaison 7.

Lesdits moyens 30 reçoivent des informations enregistrées dans la base de données 5 et ils créent une sous-base de données de l'ensemble des pistes d'atterrissage de l'aéroport. Comme indiqué précédemment, ces pistes d'atterrissage sont répertoriées dans la base de données 5 :

- en cas de base de données aéroportuaires, par les coordonnées en latitude et en longitude du seuil (extrémité amont) de la piste et de la fin (extrémité aval) de la piste ; et
- dans le cas d'une base de données de navigation, par les coordonnées en latitude ($\lambda$THR) et en longitude ($\mu$THR) du seuil de la piste et de son orientation magnétique QFU.

Les moyens 30 créent alors une sous-base de données de la base de données 5 (relative à l'aéroport et munie d'un nombre n de pistes d'atterrissage, n étant un entier supérieur ou égal à 2) qui est munie de n couples de coordonnées ({$\lambda$THR, $\mu$THR}, QFU).

Par conséquent, dans le cas d'une base de données de navigation, ces informations sont simplement extraites de ladite base de données 5. En revanche, dans le cas d'une base de données aéroportuaires, lesdits moyens 30 doivent calculer l'orientation QFUk de chaque piste d'atterrissage d'indice k. Ce calcul est réalisé de la manière suivante :

- $\forall k \in [1,n]$, si $\sin(\mu\text{END}k-\mu\text{THR}k) < 0$,

$$QFUk = \arccos\left(\frac{\sin(\lambda\text{END}k) - \sin(\lambda\text{THR}k).\cos(\text{LRWY}k)}{\sin(\text{LRWY}k).\cos(\lambda\text{THR}k)}\right)$$

- sinon, $QFUk = 2\pi - \arccos\left(\frac{\sin(\lambda\text{END}k) - \sin(\lambda\text{THR}k).\cos(\text{LRWY}k)}{\sin(\text{LRWY}k).\cos(\lambda\text{THR}k)}\right)$

où LRWYk est la longueur de la piste, en mètre, qui est calculée comme suit :

$$LRWYk = 2.R.\arcsin \sqrt{\sin^2\left(\frac{\lambda\text{THR}k - \lambda\text{END}k}{2}\right) + \cos(\lambda\text{THR}k).\cos(\lambda\text{END}k).\sin^2\left(\frac{\mu\text{THR}k - \mu\text{END}k}{2}\right)}$$

avec R le rayon de la terre (en mètre).

En outre, lesdits moyens 31 comportent :

- un voteur (non représenté) qui est formé de manière à déterminer, en temps réel, comme hauteur caractéristique HAC, la valeur médiane entre les valeurs suivantes : Hp-Ha, Hra et HO, avec :

  - Hp l'altitude baro-inertielle courante de l'aéronef A (en référence QNH), en pied ;
  - Ha l'altitude de l'aéroport (fournie par la base de données 5), en pied ;
  - Hra l'altitude radio-altimétrique courante de l'aéronef A, en pied ; et
  - H0 une valeur de hauteur prédéterminée, par exemple 10 000 pieds (environ 3 km) ; et

- des moyens (non représentés) pour vérifier si cette hauteur caractéristique HAC est située dans la fenêtre de détection qui est limitée par une valeur de hauteur minimale Hmin prédéterminée, par exemple 100 pieds (environ 30 mètres), et par une valeur de hauteur maximale prédéterminée Hmax, par exemple 200 pieds (environ 60 mètres).

De préférence, les moyens 31 permettent d'élaborer un booléen autorisant une phase de test mise en oeuvre par les moyens 32 et une phase de détermination mise en oeuvre par les moyens 35.

Lorsque l'aéronef A est en approche, deux situations peuvent se présenter :

- si HAC est supérieur à Hmax ou inférieur à Hmin, alors il est à l'extérieur de la fenêtre de détection et le booléen (d'autorisation) est fixé à 0;
- sinon, ledit booléen est fixé à 1.

Lesdits moyens 32 permettent de tester, lorsque le booléen d'autorisation est à 1, l'ensemble des pistes d'atterrissage possibles répertoriées dans la sous-base de données créée par les moyens 30. Pour ce faire, lesdits moyens 32 calculent l'écart angulaire ξk[i] (entre l'orientation géographique de la piste 2 et l'orientation d'une droite passant par le seuil P1 de la piste 2 et la position courante Pc de l'aéronef A), pour chaque piste d'atterrissage quelconque d'indice k, à chaque pas de calcul i du dispositif 4 (qui est supposé mettre en oeuvre p pas de calcul pendant le temps que ledit booléen est à 1), de la manière suivante :

- $\forall k \in [1, n], \forall i \in [0, p], \zeta k[i] = \theta AMk[i] - QFUk$

- $\forall k \in [1,n], \forall i \in [0,p]$, si $\sin(\mu AC[i] - \mu THRk) < 0$,

$$\theta AMk[i] = \arccos\left(\frac{\sin(\lambda AC[i]) - \sin(\lambda THRk).\cos(\rho AMk[i])}{\sin(\rho AMk[i]).\cos(\lambda THRk)}\right)$$

- sinon, $\theta AMk[i] = 2\pi - \arccos\left(\frac{\sin(\lambda AC[i]) - \sin(\lambda THRk).\cos(\rho AMk[i])}{\sin(\rho AMk[i]).\cos(\lambda THRk)}\right)$

- $$\rho AMk[i] = 2.R.\arcsin\sqrt{\sin^2\left(\frac{\lambda THRk - \lambda AC[i]}{2}\right) + \cos(\lambda THRk).\cos(\lambda AC[i]).\sin^2\left(\frac{\mu THRk - \mu AC[i]}{2}\right)}$$

dans lesquelles expressions :

- $\lambda THRk$ et $\mu THRk$ sont les coordonnées en latitude et en longitude (WGS 84) du seuil de ladite piste d'atterrissage d'indice k ;
- $\lambda AC[i]$ et $\mu AC[i]$ sont les coordonnées courantes en latitude et en longitude de l'aéronef A ; et
- R est le rayon de la terre.

Les moyens 32 calculent, de plus, la moyenne cumulative sur la fenêtre de détection de ces écarts. En effet, en supposant que pendant le laps de temps où le dispositif 4 a vu le booléen d'autorisation de détection à 1, ce dispositif 4 ait calculé p valeurs de chacun de ces écarts, alors la moyenne cumulative est donnée par la formule suivante :

$$\forall k \in [2, n], \overline{\zeta}k = \frac{1}{p+1}.\sum_{i=0}^{p}\zeta k[i]$$

On notera qu'en terme d'implantation dans le dispositif 4 dans lequel se trouve l'algorithme de détection automatique, il est aisé de réaliser le calcul de cette moyenne cumulative de manière récurrente. En effet :

$$j = 0 \qquad Sk[0] = \zeta k[0]$$

$$j = 1 \qquad Sk[1] = \frac{1}{2}.Sk[0] + \frac{1}{2}.\zeta k[1]$$

$$\vdots$$

(suite)

$$j = i \qquad Sk[i] = \frac{i}{i+1}.Sk[i-1] + \frac{1}{i+1}.\zeta k[i]$$

$$\vdots$$

$$j = p \qquad \overline{\zeta}k = \frac{1}{p+1}.\sum_{i=0}^{p} \zeta k[i] = Sk[p]$$

Les moyens 35 permettent enfin de choisir la piste d'atterrissage la plus vraisemblable tout au long de cette phase de détection. En effet, dès que le booléen d'autorisation retombe à 0, la piste la plus vraisemblable sera celle dont la moyenne cumulative sera la plus faible, ce qui se formalise de la manière suivante :

$$\exists k0 \in [2, n], \ \overline{\zeta}k0 = \min_k \overline{\zeta}k$$

La piste d'atterrissage 2 est donc définie par un couple ({λTHRk0, μTHRk0}, QFUk0).

## Revendications

1. Procédé d'aide au pilotage d'un aéronef (A) lors d'une phase d'atterrissage sur un aéroport qui est muni d'une pluralité de pistes d'atterrissage (2), ledit aéronef (A) étant pourvu d'un système de freinage automatique (3) qui est susceptible de freiner automatiquement l'aéronef (A) au sol en fonction d'un mode de freinage sélectionné, ledit système de freinage automatique (3) comprenant une pluralité de modes de freinage différents réalisant respectivement des freinages d'intensités différentes, procédé selon lequel :

a) on détermine l'une desdites pistes d'atterrissage de l'aéroport, qui est destinée à l'atterrissage de l'aéronef (A) ;
b) on détermine automatiquement des caractéristiques de la piste d'atterrissage déterminée à l'étape a) ;
c) on détermine automatiquement, de façon répétitive, la position courante (Pc) de l'aéronef (A) dans un repère (Rp) lié à ladite piste d'atterrissage (2) déterminée ; et
d) dès que l'aéronef (A) passe à une hauteur donnée au-dessus de ladite piste d'atterrissage (2) déterminée, de façon automatique :

d1) on estime, à l'aide au moins de ladite position courante (Pc), une distance minimale de freinage qui représente la distance le long de la piste d'atterrissage (2) jusqu'à l'arrêt de l'aéronef (A) sur cette piste d'atterrissage (2) ;
d2) on compare cette distance minimale de freinage à la longueur de ladite piste d'atterrissage (2) déterminée ; et
d3) si ladite distance minimale de freinage est supérieure à la longueur de ladite piste d'atterrissage (2) déterminée, et tant que ceci est le cas, on émet automatiquement au moins une alerte dans le poste de pilotage de l'aéronef (A),

les opérations suivantes étant réalisées à l'étape d1), pour estimer la distance minimale de freinage :

- on calcule, à l'aide de la position courante (Pc) de l'aéronef (A) par rapport à un plan de descente standard, une distance APD qui est relative à une phase aérienne au-dessus de la piste d'atterrissage (2) ;
- on calcule, à l'aide d'un modèle de performance, une distance GPD de roulage au sol entre le toucher du sol par l'aéronef (A) et l'arrêt définitif dudit aéronef (A) ; et
- on fait la somme desdites distances APD et GPD de manière à obtenir une distance minimale, à laquelle on soustrait la distance longitudinale entre la position courante de l'aéronef (A) et le seuil de la piste pour obtenir ladite distance minimale de freinage,

**caractérisé en ce qu'**à l'étape d3), on émet une alerte pour informer l'équipage que la capacité de freinage du mode de freinage actuellement sélectionné sur ledit système de freinage automatique (3) ne sera pas suffisante pour arrêter de manière sûre l'aéronef (A) sur ladite piste d'atterrissage (2) et l'inciter à sélectionner sur ledit système de freinage automatique (3), un mode de freinage présentant une intensité de freinage plus importante que celle dudit mode de freinage actuellement sélectionné.

2. Procédé selon la revendication 1,
**caractérisé en ce que** l'on compare le mode de freinage actuellement sélectionné au mode de freinage maximal du système de freinage automatique (3), et **en ce qu'**à l'étape d3), on émet ladite alerte uniquement si ledit mode de freinage actuellement sélectionné ne correspond pas audit mode de freinage maximal.

3. Procédé selon l'une quelconque des revendications précédentes,
**caractérisé en ce que** si, à la fin d'une durée prédéterminée après l'émission d'une alerte à l'étape d3), l'équipage n'a pas sélectionné un autre mode de freinage, on sélectionne automatiquement, à une étape d4), sur ledit système de freinage automatique (3), un mode de freinage présentant une intensité de freinage plus importante que celle dudit mode de freinage actuellement sélectionné.

4. Procédé selon la revendication 3,
**caractérisé en ce qu'**une sélection automatique à l'étape d4) est réalisée de proche en proche :

> a) en choisissant automatiquement le mode de freinage d'intensité de freinage immédiatement supérieure à celle du mode de freinage actuel ; et
> b) en vérifiant automatiquement si ce mode de freinage choisi est suffisant pour arrêter de manière sûre l'aéronef (A) sur la piste d'atterrissage (2),

les étapes a) et b) étant répétées automatiquement jusqu'à l'obtention d'un mode de freinage suffisant à l'étape b), ce mode de freinage suffisant étant alors sélectionné automatiquement sur ledit système de freinage automatique (3) de l'aéronef (A).

5. Procédé selon l'une quelconque des revendications précédentes,
**caractérisé en ce que** l'on inhibe automatiquement au moins l'étape d3), à partir d'une hauteur de vol donnée au-dessus de la piste d'atterrissage (2) et ceci jusqu'à une activation dudit système de freinage automatique (3).

6. Procédé selon l'une quelconque des revendications précédentes,
**caractérisé en ce qu'**à l'étape a), on détermine automatiquement la piste d'atterrissage (2) destinée à l'atterrissage de l'aéronef (A) sur ledit aéroport, et **en ce que**, pour déterminer cette piste d'atterrissage (2), on réalise, de façon automatique, la suite d'opérations suivante :

> a1) on détermine, pour chacune desdites pistes d'atterrissage de l'aéroport, les coordonnées du seuil de la piste d'atterrissage correspondante, ainsi que son orientation ;
> a2) on vérifie, de façon répétitive, si une hauteur caractéristique qui dépend de l'altitude actuelle de l'aéronef (A) et de l'altitude de l'aéroport est située à l'intérieur d'une fenêtre de détection en hauteur prédéterminée ;
> a3) dès que ladite hauteur caractéristique est située à l'intérieur de ladite fenêtre de détection, on calcule, de façon répétitive, pour chacune desdites pistes d'atterrissage, un écart angulaire entre l'orientation géographique de la piste d'atterrissage correspondante et une droite passant par la position actuelle de l'aéronef (A) et le seuil de cette piste d'atterrissage, en tenant compte des informations déterminées à l'étape a1), ces écarts angulaires étant calculés pour chaque piste d'atterrissage de façon répétitive, et ceci jusqu'à ce que ladite hauteur caractéristique soit de nouveau située hors de ladite fenêtre de détection ; et
> a4) à ce moment, on détermine l'une desdites pistes d'atterrissage en tenant compte des différents écarts angulaires calculés à l'étape a3).

7. Procédé selon la revendication 6,
**caractérisé en ce qu'**à l'étape a), la détermination automatique a pour but de confirmer une détermination manuelle préalable de la piste d'atterrissage (2), faite par un opérateur.

8. Procédé selon l'une quelconque des revendications précédentes,
**caractérisé en ce qu'**entre les étapes c) et d), on réalise une étape intermédiaire consistant à vérifier que l'aéronef (A) est bien en train d'atterrir sur la piste d'atterrissage (2) déterminée à l'étape a).

9. Procédé selon l'une quelconque des revendications précédentes,
**caractérisé en ce que** ledit modèle de performance dépend d'un état prévisionnel de la piste d'atterrissage (2) déterminée.

10. Procédé selon l'une quelconque des revendications précédentes,
**caractérisé en ce qu'**à l'étape d1), on augmente ladite distance minimale de freinage si l'aéronef (A) est situé au-dessus du plan de descente standard et va rejoindre ce dernier au-delà d'un seuil (P1) de la piste d'atterrissage (2).

11. Dispositif d'aide au pilotage d'un aéronef (A) lors d'une phase d'atterrissage sur un aéroport qui est muni d'une pluralité de pistes d'atterrissage (2), ledit aéronef (A) étant pourvu d'un système de freinage automatique (3) qui est susceptible de freiner automatiquement l'aéronef (A) au sol en fonction d'un mode de freinage sélectionné, ledit système de freinage automatique (3) comprenant une pluralité de modes de freinage différents réalisant respectivement des freinages d'intensités différentes, ledit dispositif (1) comportant :

- un dispositif de détermination de piste (4) pour déterminer, lors de la phase d'atterrissage, l'une desdites pistes d'atterrissage de l'aéroport, qui est destinée à l'atterrissage ;
- des moyens (5) pour fournir automatiquement des caractéristiques de la piste d'atterrissage (2) déterminée ;
- des moyens (6) pour déterminer automatiquement la position courante (Pc) de l'aéronef (A) dans un repère (Rp) lié à ladite piste d'atterrissage (2) déterminée ;
- des moyens d'estimation (8) pour estimer automatiquement, dès que l'aéronef (A) passe à une hauteur donnée au-dessus de ladite piste d'atterrissage (2) déterminée, à l'aide au moins de ladite position courante (Pc), une distance minimale de freinage qui représente la distance le long de la piste d'atterrissage (2) jusqu'à l'arrêt de l'aéronef (A) sur cette piste d'atterrissage (2) ;
- des moyens (10) pour comparer automatiquement cette distance minimale de freinage à la longueur de ladite piste d'atterrissage (2) déterminée ; et
- des moyens activables (13) qui sont susceptibles d'émettre automatiquement au moins une alerte dans le poste de pilotage de l'aéronef (A), et qui sont activés lorsque ladite distance minimale de freinage est supérieure à la longueur de ladite piste d'atterrissage (2) déterminée, et tant que ceci est le cas,

lesdits moyens d'estimation (8) comportant les moyens suivants pour estimer la distance minimale de freinage :

- des moyens (37) pour calculer, à l'aide de la position courante (Pc) de l'aéronef (A) par rapport au plan de descente standard, une distance APD qui est relative à une phase aérienne au-dessus de la piste d'atterrissage (2) ;
- des moyens (38) pour calculer, à l'aide dudit modèle de performance, une distance GPD de roulage au sol entre le toucher du sol par l'aéronef (A) et l'arrêt définitif dudit aéronef (A) ; et
- des moyens (39) pour faire la somme desdites distances APD et GPD de manière à obtenir une distance minimale, à laquelle est soustraite la distance longitudinale entre la position courante de l'aéronef (A) et le seuil de la piste pour obtenir ladite distance minimale de freinage,

**caractérisé en ce que** lesdits moyens activables (13) émettent, le cas échéant, une alerte pour informer l'équipage que la capacité de freinage du mode de freinage actuellement sélectionné sur ledit système de freinage automatique (3) ne sera pas suffisante pour arrêter de manière sûre l'aéronef (A) sur ladite piste d'atterrissage (2) et inciter l'équipage à sélectionner, sur ledit système de freinage automatique (3), un mode de freinage présentant une intensité de freinage plus importante que celle dudit mode de freinage actuellement sélectionné.

12. Dispositif selon la revendication 11,
**caractérisé en ce qu'**il comporte, de plus, des moyens (19) de reconfiguration automatique du système de freinage automatique (3).

13. Dispositif selon l'une des revendications 11 et 12,
**caractérisé en ce qu'**il comporte, de plus, des moyens (18) susceptibles d'inhiber au moins lesdits moyens (13) d'émission d'une alerte.

14. Dispositif selon l'une quelconque des revendications 11 à 13,
**caractérisé en ce que** ledit dispositif de détermination de piste (4) comporte :

- des premiers moyens (30) pour déterminer automatiquement, lors d'une phase d'atterrissage, pour chacune desdites pistes d'atterrissage de l'aéroport, les coordonnées du seuil de la piste d'atterrissage correspondante, ainsi que son orientation ;

- des deuxièmes moyens (31) pour vérifier, de façon répétitive, si une hauteur caractéristique qui dépend de l'altitude actuelle de l'aéronef (A) et de l'altitude de l'aéroport est située à l'intérieur d'une fenêtre de détection en hauteur prédéterminée ;

- des troisièmes moyens (32) pour calculer, de façon répétitive, dès que ladite hauteur caractéristique est située à l'intérieur de ladite fenêtre de détection, pour chacune desdites pistes d'atterrissage, un écart angulaire entre l'orientation géographique de la piste d'atterrissage correspondante et une droite passant par la position actuelle de l'aéronef (A) et le seuil de cette piste d'atterrissage, en tenant compte des informations déterminées par lesdits premiers moyens (30), ces écarts angulaires étant calculés pour chaque piste d'atterrissage de façon répétitive et ceci jusqu'à ce que ladite hauteur caractéristique soit de nouveau située hors de ladite fenêtre de détection ; et

- des quatrièmes moyens (35) pour déterminer l'une desdites pistes d'atterrissage, en tenant compte des écarts angulaires calculés par lesdits troisièmes moyens (32).

**Patentansprüche**

1. Verfahren zur Unterstützung des Fliegens eines Flugzeugs (A) bei einer Landephase auf einem Flugplatz, der mit einer Vielzahl von Landebahnen (2) ausgestattet ist, wobei das Flugzeug (A) mit einem automatischen Bremssystem (3) ausgestattet ist, das imstande ist, das Flugzeug (A) auf dem Boden in Abhängigkeit von einem ausgewählten Bremsmodus automatisch zu bremsen, wobei das automatische Bremssystem (3) eine Vielzahl unterschiedlicher Bremsmodi umfasst, die jeweils Bremsungen mit unterschiedlicher Intensität durchführen, Verfahren, gemäß dem:

a) eine der Landebahnen des Flugplatzes bestimmt wird, die für die Landung des Flugzeugs (A) bestimmt ist,
b) Merkmale der in Schritt a) bestimmten Landebahn automatisch bestimmt werden,
c) die aktuelle Position (Pc) des Flugzeugs (A) in einem mit der bestimmten Landebahn (2) verbundenen Bezug (Rp) wiederholend automatisch bestimmt wird, und,
d) sobald das Flugzeug (A) in eine bestimmte Höhe über der bestimmten Landebahn (2) wechselt, automatisch:

d1) mit Hilfe von mindestens der aktuellen Position (Pc) eine minimale Bremsdistanz geschätzt wird, die die Distanz entlang der Landebahn (2) bis zum Stillstand des Flugzeugs (A) auf dieser Landebahn (2) darstellt,
d2) diese minimale Bremsdistanz mit der Länge dieser bestimmten Landebahn (2) verglichen wird und,
d3) wenn die minimale Bremsdistanz größer als die Länge der bestimmten Landebahn (2) ist, und sofern dies der Fall ist, im Cockpit des Flugzeugs (A) mindestens eine Warnung automatisch ausgelöst wird,

wobei in Schritt d1) zur Schätzung der minimalen Bremsdistanz die folgenden Maßnahmen durchgeführt werden:

- mit Hilfe der aktuellen Position (Pc) des Flugzeugs (A) im Verhältnis zu einem Standard-Sinkplan Berechnen einer Distanz APD, die zu einer Flugphase über der Landebahn (2) relativ ist,
- mit Hilfe eines Performancemodells, Berechnen einer Distanz GPD des Rollens über den Boden zwischen dem Aufsetzen des Flugzeugs (A) auf dem Boden und dem definitiven Stillstand des Flugzeugs (A), und,
- Bilden der Summe der Distanzen APD und GPD, um eine Mindestdistanz zu erhalten, von der die Längsdistanz zwischen der aktuellen Position des Flugzeugs (A) und der Grenze der Bahn abgezogen wird, um die minimale Bremsdistanz zu erhalten,

**dadurch gekennzeichnet, dass** in Schritt d3) eine Warnung gesendet wird, um die Besatzung zu informieren, dass die Bremsfähigkeit des im automatischen Bremssystem (3) aktuell ausgewählten Bremsmodus nicht ausreichend ist, um das Flugzeug (A) auf der Landebahn (2) sicher zum Stillstand zu bringen, und sie aufzufordern, aus dem automatischen Bremssystem (3) einen Bremsmodus auszuwählen, der eine höhere Bremskraft als die des aktuell ausgewählten Bremsmodus aufweist.

2. Verfahren nach Anspruch 1,
**dadurch gekennzeichnet, dass** der aktuell ausgewählte Bremsmodus mit dem maximalen Bremsmodus des automatischen Bremssystems (3) verglichen wird und dass in Schritt d3) nur dann die Warnung gesendet wird, wenn der aktuell ausgewählte Bremsmodus nicht dem maximalen Bremsmodus entspricht.

3. Verfahren nach einem der vorangehenden Ansprüche,
**dadurch gekennzeichnet, dass**, wenn am Ende einer vorbestimmten Dauer nach der Sendung einer Warnung in Schritt d3) die Besatzung keinen anderen Bremsmodus ausgewählt hat, in einem Schritt d4) im automatischen Bremssystem (3) automatisch ein Bremsmodus ausgewählt wird, der eine höhere Bremskraft als die des aktuell ausgewählten Bremsmodus aufweist.

4. Verfahren nach Anspruch 3,
**dadurch gekennzeichnet, dass** eine automatische Auswahl in Schritt d4) nach und nach durchgeführt wird:

   a) indem automatisch der Bremsmodus mit der Bremskraft ausgewählt wird, die unmittelbar höher als die des aktuellen Bremsmodus ist, und
   b) indem automatisch überprüft wird, ob dieser gewählte Bremsmodus ausreichend ist, um das Flugzeug (A) auf der Landebahn (2) sicher zum Stillstand zu bringen,

wobei die Schritte a) und b) automatisch bis zum Erhalt eines ausreichenden Bremsmodus in Schritt b) wiederholt werden, wobei dieser ausreichende Bremsmodus dann automatisch aus dem automatischen Bremssystem (3) des Flugzeugs (A) ausgewählt wird.

5. Verfahren nach einem der vorangehenden Ansprüche,
**dadurch gekennzeichnet, dass** ab einer bestimmten Flughöhe über der Landebahn (2) und bis zu einer Aktivierung des automatischen Bremssystems (3) mindestens der Schritt d3) automatisch gehemmt wird.

6. Verfahren nach einem der vorangehenden Ansprüche,
**dadurch gekennzeichnet, dass** in Schritt a) die für die Landung des Flugzeugs (A) auf dem Flugplatz bestimmte Landebahn (2) automatisch bestimmt wird und dass, um diese Landebahn (2) zu bestimmen, automatisch die folgende Maßnahmenfolge durchgeführt wird:

   a1) Bestimmen der Koordinaten der Grenze der entsprechenden Landebahn für jede der Landebahnen des Flugplatzes sowie ihre Ausrichtung,
   a2) wiederholendes Überprüfen, ob sich eine charakteristische Höhe, die von der aktuellen Höhe des Flugzeugs (A) und von der Höhe des Flugplatzes abhängt, in einem vorbestimmten Höhendetektionsfenster befindet,
   a3) sobald sich die charakteristische Höhe innerhalb des Detektionsfensters befindet, für jede der Landebahnen wiederholendes Berechnen einer Winkelabweichung zwischen der geografischen Ausrichtung der entsprechenden Landebahn und einer Geraden, die durch die aktuelle Position des Flugzeugs (A) und die Grenze dieser Landebahn verläuft, unter Berücksichtigung der in Schritt a1) bestimmten Informationen, wobei diese Winkelabweichungen für jede Landebahn wiederholt berechnet werden, und zwar bis sich die charakteristische Höhe erneut außerhalb des Detektionsfensters befindet, und
   a4) in diesem Moment Bestimmen einer der Landebahnen unter Berücksichtigung der verschiedenen in Schritt a3) berechneten Winkelabweichungen.

7. Verfahren nach Anspruch 6,
**dadurch gekennzeichnet, dass** die automatische Bestimmung in Schritt a) das Ziel hat, eine vorherige manuelle Bestimmung der Landebahn (2), die von einem Bediener durchgeführt wurde, zu bestätigen.

8. Verfahren nach einem der vorangehenden Ansprüche,
**dadurch gekennzeichnet, dass** zwischen den Schritten c) und d) ein Übergangsschritt durchgeführt wird, der darin besteht zu überprüfen, dass das Flugzeug (A) wirklich im Begriff ist, auf der in Schritt a) bestimmten Landebahn (2) zu landen.

9. Verfahren nach einem der vorangehenden Ansprüche,
**dadurch gekennzeichnet, dass** das Performancemodell von einem voraussichtlichen Zustand der bestimmten Landebahn (2) abhängt.

10. Verfahren nach einem der vorangehenden Ansprüche,
**dadurch gekennzeichnet, dass** in Schritt d1) die minimale Bremsdistanz verlängert wird, wenn sich das Flugzeug (A) über dem Standard-Sinkplan befindet und diesen jenseits einer Grenze (P1) der Landebahn (2) erreichen wird.

11. Vorrichtung zur Unterstützung des Fliegens eines Flugzeugs (A) bei einer Landephase auf einem Flugplatz, der mit einer Vielzahl von Landebahnen (2) ausgestattet ist, wobei das Flugzeug (A) mit einem automatischen Bremssystem (3) ausgestattet ist, das imstande ist, das Flugzeug (A) auf dem Boden in Abhängigkeit von einem ausgewählten Bremsmodus automatisch zu bremsen, wobei das automatische Bremssystem (3) eine Vielzahl verschiedener Bremsmodi umfasst, die jeweils Bremsungen mit unterschiedlicher Intensität durchführen, wobei die Vorrichtung (1) aufweist:

- eine Bahnbestimmungsvorrichtung (4), um während der Landephase eine der Landebahnen des Flugplatzes zu bestimmen, die für die Landung bestimmt ist,
- Mittel (5), um Merkmale der bestimmten Landebahn (2) automatisch bereitzustellen,
- Mittel (6), um die aktuelle Position (Pc) des Flugzeugs (A) in einem mit der bestimmten Landebahn (2) verbundenen Bezug (Rp) automatisch zu bestimmen,
- Schätzmittel (8), um, sobald das Flugzeug (A) in eine bestimmte Höhe über der bestimmten Landebahn (2) wechselt, mit Hilfe von mindestens der aktuellen Position (Pc) eine minimale Bremsdistanz automatisch zu schätzen, die die Distanz entlang der Landebahn (2) bis zum Stillstand des Flugzeugs (A) auf dieser Landebahn (2) darstellt,
- Mittel (10), um diese minimale Bremsdistanz mit der Länge der bestimmten Landebahn (2) automatisch zu vergleichen, und
- aktivierbare Mittel (13), die imstande sind, mindestens eine Warnung in das Cockpit des Flugzeugs (A) automatisch zu senden, und die aktiviert sind, wenn die minimale Bremsdistanz größer als die Länge der bestimmten Landebahn (2) ist, und sofern dies der Fall ist,

wobei die Schätzmittel (8) die folgenden Mittel aufweisen, um die minimale Bremsdistanz zu schätzen:

- Mittel (37), um mit Hilfe der aktuellen Position (Pc) des Flugzeugs (A) im Verhältnis zum Standard-Sinkplan eine Distanz APD zu berechnen, die zu einer Flugphase über der Landebahn (2) relativ ist,
- Mittel (38), um mit Hilfe des Performancemodells eine Distanz GPD des Rollens über den Boden zwischen dem Aufsetzen des Flugzeugs (A) auf dem Boden und dem definitiven Stillstand des Flugzeugs (A) zu berechnen, und,
- Mittel (39), um die Summe der Distanzen APD und GPD zu bilden, um eine Mindestdistanz zu erhalten, von der die Längsdistanz zwischen der aktuellen Position des Flugzeugs (A) und der Grenze der Bahn abgezogen wird, um die minimale Bremsdistanz zu erhalten,

**dadurch gekennzeichnet, dass** die aktivierbaren Mittel (13) gegebenenfalls eine Warnung senden, um die Besatzung zu informieren, dass die Bremsfähigkeit des im automatischen Bremssystem (3) aktuell ausgewählten Bremsmodus nicht ausreichend ist, um das Flugzeug (A) auf der Landebahn (2) sicher zum Stillstand zu bringen, und die Besatzung aufzufordern, aus dem automatischen Bremssystem (3) einen Bremsmodus auszuwählen, der eine höhere Bremskraft als die des aktuell ausgewählten Bremsmodus aufweist.

12. Vorrichtung nach Anspruch 11,
**dadurch gekennzeichnet, dass** sie zusätzlich Mittel (19) für die automatische Rekonfiguration des automatischen Bremssystems (3) aufweist.

13. Vorrichtung nach Anspruch 11 und 12,
**dadurch gekennzeichnet, dass** sie zusätzlich Mittel (18) aufweist, die imstande sind, mindestens die Sendemittel (13) einer Warnung zu hemmen.

14. Vorrichtung nach einem der Ansprüche 11 bis 13, **dadurch gekennzeichnet, dass** die Bahnbestimmungsvorrichtung (4) aufweist:

- erste Mittel (30), um bei einer Landephase für jede der Landebahnen des Flugplatzes die Koordinaten der Grenze der entsprechenden Landebahn sowie ihre Ausrichtung automatisch zu bestimmen,
- zweite Mittel (31), um wiederholend zu überprüfen, ob sich eine charakteristische Höhe, die von der aktuellen Höhe des Flugzeugs (A) und von der Höhe des Flugplatzes abhängt, in einem vorbestimmten Höhendetektionsfenster befindet,
- dritte Mittel (32), um, sobald sich die charakteristische Höhe innerhalb des Detektionsfensters befindet, für jede der Landebahnen eine Winkelabweichung zwischen der geografischen Ausrichtung der entsprechenden Landebahn und einer Geraden, die durch die aktuelle Position des Flugzeugs (A) und die Grenze dieser Landebahn verläuft, unter Berücksichtigung der von den ersten Mitteln (30) bestimmten Informationen wiederholend zu berechnen, wobei diese Winkelabweichungen für jede Landebahn wiederholt berechnet werden, und zwar bis sich die charakteristische Höhe erneut außerhalb des Detektionsfensters befindet; und

23

- vierte Mittel (35), um unter Berücksichtigung der von den dritten Mitteln (32) berechneten Winkelabweichungen eine der Landebahnen zu bestimmen.

**Claims**

1. A piloting assistance process for an aircraft (A) upon a landing phase on an airport being provided with a plurality of landing runways (2), said aircraft (A) being provided with an automatic braking system (3) being able to automatically brake the aircraft (A) on the ground depending on a selected braking mode, said automatic braking system (3) comprising a plurality of different braking modes respectively performing different strength brakings, process according to which:

   a) one of said landing runways of the airport is determined, being intended for landing of the aircraft (A);
   b) characteristics of the landing runway determined in step a) are automatically determined;
   c) the usual position (Pc) of the aircraft (A) is automatically and repeatedly determined in a reference point (Rp) connected to said determined landing runway (2); and
   d) as soon as the aircraft (A) flies at a given height above said determined landing runway (2), automatically:

      d1) using at least said usual position (Pc), a minimum braking distance is estimated representing the distance along the landing runway (2) until the aircraft (A) stops on this landing runway (2);
      d2) this minimum braking distance is compared to the length of said determined landing runway (2); and
      d3) if said minimum braking distance is higher than the length of said determined landing runway (2), and as long as this is the case, at least one alarm is automatically emitted in the cockpit of the aircraft (A),

   the following operations being performed in step d1), for estimating the minimum braking distance:

      - by means of the current position (Pc) of the aircraft compared to the standard descent plane, a distance APD is calculated being relative to an air phase above the landing runway (2);
      - by means of said performance model, a ground running distance GPD is calculated between touching the ground by the aircraft (A) and the final stop of said aircraft (A); and
      - the sum of said distances APD and GPD is calculated for obtaining a minimum braking distance, from which the longitudinal distance between the current position of the aircraft (A) and the threshold of the runway is deducted for obtaining the minimum braking distance,

   **characterized in that** in step d3), an alarm is emitted for informing the crew that the braking capacity of the currently selected braking mode on said automatic braking system (3) will not be sufficient for safely stopping the aircraft (A) on said landing runway (2) and lead them to select on said automatic braking system (3), a braking mode with a braking strength higher than that of said currently selected braking mode.

2. The process according to claim 1,
   **characterized in that** the currently selected braking mode is compared to the maximum braking mode of the automatic braking system (3), and **in that** in step d3), said alarm is emitted only if said currently selected braking mode does not correspond to said maximum braking mode.

3. The process according to any one of preceding claims,
   **characterized in that**, if, at the end of a predetermined period of time after an alarm has been emitted in step d3), the crew has not selected another braking mode, a braking mode is automatically selected, in a step d4) on said automatic braking system, such a braking mode having a higher braking strength than that of said currently selected braking mode.

4. The process according to claim 3,
   **characterized in that** an automatic selection is performed in step d4) step by step:

   a) automatically selecting the braking mode with a braking strength immediately higher than that of the current braking mode; and
   b) automatically checking whether such a selected braking mode is sufficient for safely stopping the aircraft (A) on the landing runway (2),

the steps a) and b) being automatically repeated until a sufficient braking mode is obtained in step b), such a sufficient braking mode being then selected automatically on said automatic braking system (3) of the aircraft (A).

5. The process according to any one of preceding claims, **characterized in that** at least step d3) is automatically inhibited, from a given flight height above the landing runway (2), and this until said automatic braking system (3) is activated.

6. The process according to any one of preceding claims, **characterized in that** in step a), the landing runway (2) is automatically determined, being intended for landing the aircraft (A) on said airport, and **in that**, for determining this landing runway (2), the following string of operations is automatically performed:

   a1) for each one of said landing runways of the airport, the coordinates of the threshold of the corresponding landing runway are determined, as well as the orientation thereof;
   a2) it is repeatedly checked, whether a characteristic height depending on the current altitude of the aircraft (A) and on the altitude of the airport is located within a predetermined height detection window;
   a3) as soon as said characteristic height is located within said detection window, for each one of said landing runways, an angular deviation is repeatedly calculated between the geographical orientation of the corresponding landing runway and a line crossing both the current position of the aircraft (A) and the threshold of this landing runway, taking into consideration the information determined in step a1), such angular deviations being calculated for each landing runway repeatedly, and this until said characteristic height is again located outside said detection window; and
   a4) at that time, one of said landing runways is determined taking into consideration the different angular deviations calculated in step a3).

7. The process according to claim 6, **characterized in that** in step a), the aim of the automatic determination is to confirm a preliminary manual determination of the landing runway (2), carried out by an operator.

8. The process according to any one of preceding claims, **characterized in that** between steps c) and d), an intermediary step is carried out, comprising checking that the aircraft (A) is actually landing on the landing runway (2) determined in step a).

9. The process according to any one of preceding claims, **characterized in that** said performance model depends on the estimated state of the determined landing runway.

10. The process according to any one of preceding claims, **characterized in that** in step d1), said minimum braking distance is increased if the aircraft (A) is located above the standard descent plane and reaches the latter beyond a threshold (P1) of the landing runway (2).

11. A piloting assistance device for an aircraft (A) upon a landing phase on an airport being provided with a plurality of landing runways (2), said aircraft (A) being provided with an automatic braking system (3) being able to automatically brake the aircraft (A) on the ground depending on a selected braking mode, said automatic braking system (3) comprising a plurality of different braking modes respectively performing different strength brakings, said device (1) comprising:

   - a runway determining device (4) for determining, upon the landing phase, one of said landing runways of the airport, being intended for landing;
   - means (5) for automatically supplying characteristics of the determined landing runway (2);
   - means (6) for determining automatically the current position (Pc) of the aircraft (A) in a reference point (Rp) connected to said determined landing runway (2);
   - estimation means (8) for estimating automatically, as soon as the aircraft (A) flies at a given height above said determined landing runway (2), using at least said current position (Pc), a minimum braking distance representing the distance along the landing runway (2) until the aircraft (A) stops on this landing runway (2);
   - means (10) for comparing automatically such a minimum braking distance to the length of said determined landing runway (2); and
   - means (13) to be activated being able to emit automatically at least one alarm in the cockpit of the aircraft (A) and being activated when said minimum braking distance is higher than the length of said determined landing runway (2), and as long as this is the case,

said estimation means (8) comprising the following means for estimating the minimum braking distance:

- means (37) for calculating, by means of the current position (Pc) of the aircraft compared to the standard descent plane, a distance APD relative to an air phase above the landing runway (2);
- means (38) for calculating, by means of said performance model, a ground running distance GPD between touching the ground by the aircraft (A) and the final stop of said aircraft (A); and
- means (39) for calculating the sum of said distances APD and GPD for obtaining a minimum braking distance, from which the longitudinal distance between the current position of the aircraft (A) and the threshold of the runway is deducted for obtaining the minimum braking distance,

**characterized in that** said means (13) to be activated emit, if applicable, an alarm for informing the crew that the braking capacity of the currently selected braking mode on said automatic braking system (3) will not be sufficient for safely stopping the aircraft (A) on said landing runway (2) and lead the crew to select, on said automatic braking system (3), a braking mode with a higher braking strength than that of said currently selected braking mode.

12. The device according to claim 11,
**characterized in that** it further comprises means (19) for automatically reconfiguring the automatic braking system (3).

13. The device according to one of claims 11 and 12,
**characterized in that** it further comprises means (18) able to inhibit at least said alarm emitting means (13).

14. The device according to any one of claims 11 to 13,
**characterized in that** said runway determination device (4) comprises:

- first means (30) for determining automatically, upon a landing phase, for each one of said landing runways of the airport, the coordinates of the threshold of the corresponding landing runway, as well as the orientation thereof;
- second means (31) for repeatedly checking, whether a characteristic height depending on the current altitude of the aircraft (A) and on the altitude of the airport is located within a predetermined height detection window;
- third means (32) for calculating, repeatedly, as soon as said characteristic height is located within said detection window, for each one of said landing runways, an angular deviation between the geographical orientation of the corresponding landing runway and a line crossing both the current position of the aircraft (A) and the threshold of this landing runway, taking into consideration the information determined by said first means (30), such angular deviations being calculated for each landing runway repeatedly, and this until said characteristic height is again located outside said detection window; and
- fourth means (35) for determining one of said landing runways, taking into consideration the angular deviations calculated by said third means (32) .

Fig. 1

Fig. 2

Fig. 5

Fig. 3

Fig. 4

## RÉFÉRENCES CITÉES DANS LA DESCRIPTION

**Documents brevets cités dans la description**

- FR 2817979
- FR 2857468
- FR 2897593
- US 20040167685 A